# EUROPEAN PATENT SPECIFICATION

(11) **EP 3 347 772 B1**
(45) Date of publication and mention of the grant of the patent: **11.03.2020**
(21) Application number: 16767129.6
(22) Date of filing: 09.09.2016
(51) Int. Cl.: G05B 13/02, G06N 5/04

(54) **METHOD OF GENERATING FUZZY KNOWLEDGE BASE FOR A PROGRAMMABLE FUZZY CONTROLLER**
VERFAHREN ZUR ERZEUGUNG EINER FUZZY-WISSENSBASIS FÜR EINEN PROGRAMMIERBAREN FUZZY-REGLER
PROCÉDÉ DE GÉNÉRATION D'UNE BASE DE CONNAISSANCES FLOUE POUR UN CONTRÔLEUR FLOU PROGRAMMABLE

(30) Priority: 10.09.2015 US 201514850211
(43) Date of publication of application: 18.07.2018
(73) Proprietor: I.Systems Automação Industrial S.A, 13075-420 Campinas - SP (BR)
(72) Inventor: BITTENCOURT SANTIAGO, Igor, Campinas - SP (BR); DA SILVA, Ronaldo Antonio, Campinas - SP (BR); LAVIGNE HALLA, Danilo, Campinas - SP (BR)
(74) Representative: Abel & Imray
(86) International application number: PCT/BR2016/050226
(87) International publication number: WO 2017/041158

(56) References cited:
- EP-A2- 0 421 793
- US-A- 5 189 728
- US-A- 5 377 304
- US-A- 5 422 984
- US-A1- 2011 071 969

## Description

### BACKGROUND OF THE INVENTION

### 1. Field of the Invention.

The present invention relates to a programmable fuzzy controller, which uses an artificial potential field approach in order to automatically generate the knowledge base used in a fuzzy controller, whereby thousands of rules can be generated from multiple inputs and outputs, and the membership functions that describe these inputs and outputs.

### 2. Description of the Related Art.

The artificial potential field method was originally developed as an alternative collision avoidance system for robotic manipulators. The manipulator would move in an abstract field of mathematically determined forces, where the position to be reached would be defined as an attractive pole, and obstacles to be avoided would be defined as repulsive surfaces.

Fuzzy logic is a mathematical system that analyzes analog input values in terms of logical variables that take continuous values between 0 and 1. These logical variables are generally mapped as sets of membership functions known as fuzzy sets. The collection of fuzzy sets used in the entire system to interpret inputs and outputs is known as the fuzzy knowledge base.

The application of fuzzy logic theory to control systems is known as fuzzy control. Although fuzzy control is one of the approaches used to implement advanced process controllers (e.g. for use in the control of chemical processes), it is highly dependent on expert knowledge for its configuration, instead of empirical or theoretical modeling. In particular, experts are called upon to supply the appropriate fuzzy sets that will make up the fuzzy rule base.

After strong initial interest in the 1980s and 90s fuzzy controllers fell out of vogue after the year 2000 and there has been little academic or commercial interest since. The problem which caused this decline in interest was the obstacle imposed by the need for manual development of the fuzzy rule base by a human expert. Commercial resources as well as academic interests shifted to automatic learning systems which were not subject to this requirement, such as Neural Networks, Bayesian Networks and Support Vector Machines. Automatic learning systems need less specific knowledge of the underlying process for their practical application, which make them preferable to fuzzy control systems.

The task of developing membership functions and fuzzy rules by experts in fuzzy logic is an empirical and difficult-to-maintain work. Alterations in the intervals of either input or output variables of the controlled process would require changes either in the rule base or in the membership functions only an expert in fuzzy logic is capable of carrying out. This need limited the use of fuzzy controllers in practical industrial applications because of the scarcity and high cost of such trained professionals.

Some controllers were developed that enabled adaptation of pre-established membership functions and fuzzy rule base. Although those controllers did reduce the need for experts in fuzzy logic, they required experts in database and/or online learning for their operation. These new experts were required because a controller that is obtained through analysis of data must be based on information that is representative of the process being controlled. If the database is not representative, the controller may exhibit undesired and even dangerous behaviors due to incorrect correlations derived from the supplied data.

In a further attempt to increase the adoption of fuzzy controllers and overcome the need for experts to configure and tune these systems, the International Electrotechnical Commission (IEC) proposed Rule nº 61131-7, which called for the standardization of the programming of the fuzzy controllers in the year 2000. This IEC61131-7 standard was adopted by some manufacturers of Programmable Logical Controllers (PLC) and Distributed Control Systems (DCS), hoping to create an interchangeable platform of fuzzy controllers, but it failed to solve the need-for-an-expert problem, which continued to cause a decline in the adoption of fuzzy controllers in industry. US 5 189 728 A discloses a classic Fuzzy Rules System with seven membership functions of similar shape and area, and a variable number of predetermined membership functions obtained from a database.

EP 0355716 defines a method of generating rules for fuzzy inference with main benefits in automation of the working-out of rules and automated adjustment of the database membership functions. The automation of the generation of fuzzy rules represents an important advance in spreading fuzzy controllers, a challenge to which EP 0355716 contributed by modeling a fixed number of functions of pertinence to a pre-established database. A large number of linguistic variables contribute with a better resolution of the fuzzy controller, a small and fixed value in said patent. The invention proposed in this document, Learning Fuzzy Control eliminates the need for previous databanks and determines automatically the number of linguistic variables and of membership functions with a view to optimize the resolution of the fuzzy controller generated automatically.

EP 2169484 proposes a fuzzy system specializing in the production of cement, which provides robust indicators of temperature profile of the cement rotary furnace equipment. The main benefit was to treat the information in a robust manner, to determine which information was contradictory in a first analysis, and to provide reliable information to a model predictive control (MPC) controller. The patent proposed now, besides generating the fuzzy system automatically, eliminates the need to use a MPC controller. The Learning Fuzzy Control goes from the analysis of the indicators to the direct writing on the final control element.

The current art fails to provide a practical method for automatic generation of a fuzzy knowledge based controller.

### SUMMARY OF THE INVENTION

The controller according to the present invention is capable of interacting directly with the process to be controlled through A/D and D/A converters, and the user does not need to have any knowledge of fuzzy logic to generate fuzzy controllers with multiple inputs and multiple outputs (MIMO). In order to work out the knowledge base of the fuzzy controller, it is necessary to provide the programmable controller (PC) with analogical inputs that contain, for each variable to be controlled: the minimum (real domain), maximum (real domain), equilibrium point (real domain), importance weight (from 0% to 100%), non-linearity (real domain), control direction (-1 or 1 for reverse and direct acting control, respectively), and whether the variable is an input or an output (-1 or 1).

In a simplified manner, the Learning Fuzzy Control is carried out in three phases:
(i) Creation of the potential fields for each variable (reading or writing) of the PC: the minimum, equilibrium point, maximum and non-linearity are parameters of a linear and derivable function that generates a linear potential field (F[x]) for each variable. The potential field should always have its minimum value F[x] = 0 for x = equilibrium point.
(ii) Sampling of the potential fields and generation of the membership functions: each potential field is sampled with small steps (x + Δx) with respect to F[x]. For each sampling xj a pertinence function is generated, the area of which is proportional to F[x], that is to say, the greater the F[x] the larger the area of the membership function. Therefore, the closer the xj is to the equilibrium point value, the lower the F[x] value will be, and consequently the area of the membership functions will also be smaller. Many membership functions with reduced areas generate an attraction area around the equilibrium point value, replicating the behavior of the potential field in the set of linguistic variables of the fuzzy system.
(iii) Creation of the fuzzy knowledge based controller: after the end of the previous phase, there is a set of membership functions for each PC variable; in this phase the variables are separated into input and output groups, and the input/output mapping is carried out according to the information of the control signal. If the control direction is 1 (direct), the first membership functions of the input variable are connected to the first membership functions of the output variable; if the control direction is -1 (reverse), the first membership functions of the input variable are connected to the last membership functions of the output variable.

After phase (iii), the Learning Fuzzy Control has generated a complete fuzzy control system which may be carried out by a controller adherent to the international standard IEC 61131-7.

### BRIEF DESCRIPTION OF THE DRAWINGS

The present invention has other advantages and features which will be more readily apparent from the following detailed description of the invention and the appended claims, when taken in conjunction with the accompanying drawings, in which:
Figure 1 is an illustration of a component of expression of variables in parameters through analogical inputs;
Figure 2 is an illustration of a component that forms the base signal of the potential field for sampling the variables;
Figure 3 is an illustration of an example of different functions following the restrictions of Minimum, Equilibrium point and Maximum;
Figure 4 is an illustration of a summary of the sampling of Fvn for generating the membership function;
Figure 4A is an illustration of interactions for sampling of the left side and of the right side of F(x);
Figure 4B is an illustration of fuzzy set using the non-linearity value < 0;
Figure 4C is an illustration of fuzzy set using non-linearity value = 0;
Figure 4D is an illustration of fuzzy set using non-linearity value > 0;
Figure 5 is an illustration of formation of the fuzzy rules, direct and reverse examples;
Figure 6 is an illustration of a machine for automatic generation of fuzzy knowledge base controller.
Figure 7 is the curve generated for Boiler pressure with NonLinear parameter equal to 0.000065 for the described specific embodiment.
Figure 8 is the curve generated for Vapor flow with NonLinear parameter equal to 0.001152 for the described specific embodiment.
Figure 9 is the curve generated for Energy flow with NonLinear parameter equal to 0.033975 for the described specific embodiment.
Figure 10 is the fuzzy set of the boiler pressure for the described specific embodiment.
Figure 11 is the fuzzy set of the vapor flow for the described specific embodiment.
Figure 12 is the fuzzy set of the energy flow for the described specific embodiment.
Figure 13 is the mapping of the fuzzy rules between the boiler pressure and the energy flow (reverse direction) for the described specific embodiment.
Figure 14 is the mapping of the fuzzy rules between the vapor flowrate and the energy flow (direct direction) for the described specific embodiment.
Figures 15-20 are flowcharts of operation according to the present invention to produce a fuzzy knowledge base.
Figures 21-23 are flowcharts of operating a fuzzy controller using a fuzzy knowledge base developed according to Figures 15-20.
Figure 24 is a block diagram of a computer for performing the flowcharts of Figures 15-20.
Figure 25 is a block diagram of an integrated fuzzy controller for performing the flowcharts of Figures 21-23.

### DETAILED DESCRIPTION

Artificial potential fields were used initially as algorithms for robot locomotion. The first mention of this approach was used by Oussama Khatib in 1986. The initial objective of this approach was to generate behaviors on robots to make them capable of carrying out autonomous navigation, avoiding (repulsive) obstacles and to cause them to be attracted by pre-established goals.

The attraction/repulsion surface may be quite flexible, starting from a cone (on a three-dimensional attractor) up to complex forms with singularities. Generating attraction surfaces for larger sizes is no problem either. It is only necessary to increase the number of input variables.

At present, the artificial potential fields are used on computer games to govern the movements of artificial intelligence of the opponents. The latter are attracted by the human players and repelled by dangers such as fire or by the shooting field of the human players, for instance.

The artificial potential field approach derives from a simple premise: avoiding places that present damage (repulsing) and approaching places that present benefits (attracting).

An industrial controller should keep the control variable as close to the set-point as possible, thus reducing the variability as much as possible.

Safe and robust industrial controllers alter the actuator values gradually and without bumps. The mathematics present to generate the potential fields guarantees that there will be no leaps (if there is no singularity in the equation), and it is guaranteed that there will be only one attraction point (the setpoint in the case of the control variable).

The decision of the attraction point for the values of the actuators and for the disturbance variables is not so obvious. There is no real value for these variables. However, the equipment operators and the process engineers are capable of estimating values that, from experience, are kept when the process remains stable. These values obtained through experience are defined as attractors both for the manipulated variables and for the disturbance variables.

The main challenge was to decide which advanced control approach would be the ideal base for applying the inspiration described above.

The traditional Proportional Integral and Derivative (PID) control strategy can be viewed as a simplification of the inspiration of the potential fields. The setpoint is the attractor and the factors Kp, Kd, Ki make the mapping between the difference between the setpoint and the controlled variable (controller error).

The simplification of the PID entails limitations to the modeling of the controller, as for instance:
Symmetry: positive errors with respect to the setpoint have an action of the manipulated variable with the same module as negative errors;
Linearity: the relation between the controller error and the manipulated variable will be the same, regardless of the setpoint or operational characteristic of the equipment, since after all the relation depends upon the constants Kp, Kd, Ki alone;
Being based on accumulators: the controller errors are weighed by the constants Kp, Kd, Ki and added up to determine the value of the manipulated variable, this characteristic prevents the "instantaneous" actions of the automatic controller. Another deficiency are systems with long times between the action of the manipulated variable and the impact on the value of the controlled variable (dead time); they are very difficult to tune (finding good values for Kp, Kd, Ki);
An input variable and an output variable: the standard PID evaluates only the control variable for its decision of the manipulated variable. There are known modifications for reading two or more variables (PID feed-forward), but after three input variables it is very difficult to tune a PID. For example, some processes need to monitor more than ten variables (one control variable and nine disturbance variables).

The PID control approach has critical limitations that make it unfeasible as a base control platform for application of the inspiration of the artificial potential fields. Other multivariable approaches for controlling industrial processes are: control by process model and control through specialist systems.

Model-based controllers start from the premise that it is possible to develop a (linear or non-linear) model of the process from a database that represents all the states of the process or by working out differential equations that govern the process. In this way, the operation will be defined by the inferences of the controller on the modeled process. The main technologies used in control through process modeling are neural networks and Model Predictive Control (MPC). Neural networks use a non-linear black-box model of the process, without any relation with real physics. Therefore, they are subject to lack of robustness and low extrapolation capacity. MPCs use linear dynamic models with multiple inputs and multiple outputs. Since industrial processes have strong non-linearity, the MPCs do not manage to capture the whole dynamics of the plant. Besides, all the model-based controls need re-tuning in when there are changes in the process, which increases the effort and the system maintenance costs.

The specialist systems have the objective of minimizing the control actions desired by the operation and process teams. Therefore, what is modeled is the ideal behavior of the controller, rather than the process itself. Usually the automatic control systems that use the approach through specialist systems are developed manually, that is to say, the rule base that governs the controller behavior is defined manually by a specialist.

The emulation of a control strategy based on the behavior starts from the premise that this strategy is not implemented at present, be it due to limitation in executing the control actions at the velocity of an algorithm or due to the analysis and interpretation of a large number of sensors available. Since there is no database, there is no way to carry out learning from data.

Specialist systems should be capable of emulating the behavior of the human specialist. The approach through artificial potential fields present a useful simplification, reducing the scope of all the possible behaviors of the specialist to only the behaviors that aim at reducing the overall error with respect to the attractors.

By transforming all the variables into potential fields, whether these are inputs or outputs, of the Fuzzy controller has simplified the problem of working out the rule base to the point that it is possible to generate the Fuzzy knowledge base automatically. The only information necessary a priori are: the upper and lower limits (MinVn and MaxVn), the equilibrium point of all the variables (MedVn) and the evaluation of how non-linear the variable is (NonLinear). With only these four types of information it is possible to generate an attractor of a size for the chosen equilibrium point. One should inform whether the configured variable is a reading or writing (IN/OUT) variable. The weight of the variable in evaluating the value of the output/writing (Weight) variable is another configuration factor for the input variables (if the configured variable is for writing/output, the weight information will be disregarded). One should insert the information if the input variable has a direct or reverse (Dir/Rev) relation with the output variable (if the variable is an output one, this information is disregarded). VN is a bus that has the information MinVn, MaxVn, MedVn, NonLinear, IN/OUT, Analog In, Dir/Rev for each reading or writing variable of the system.

The application of the potential field approach in generating Fuzzy rules enables multivariable advanced controller systems to be developed in a matter of minutes or hours, instead of months or years.

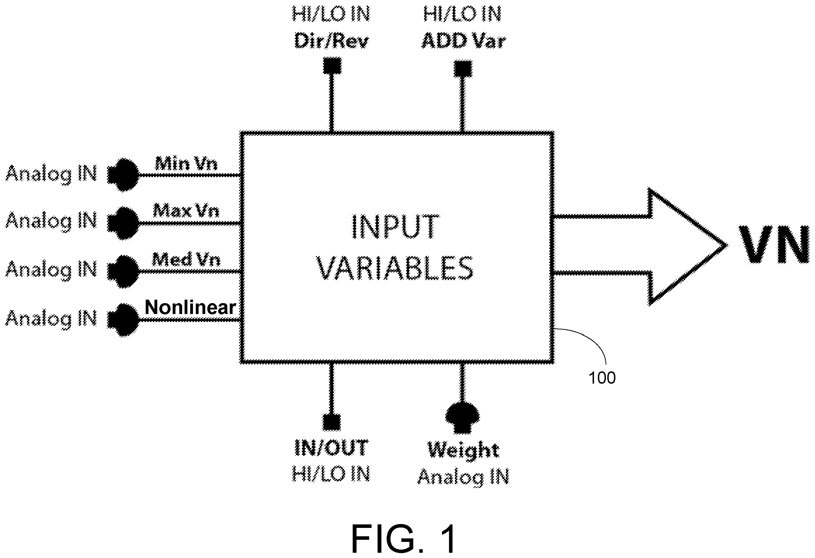

In Figure 1, one describes the Input Variables component 100 responsible for capturing the configuration parameters of each variable and transferring, through bar, to the next component. The function thereof is simply to convert the analogical inputs, make them available on the bar and communicate them to the next component, Signal Former. The parameters will be used for defining the Fvn functions for each linguistic variable Vn.

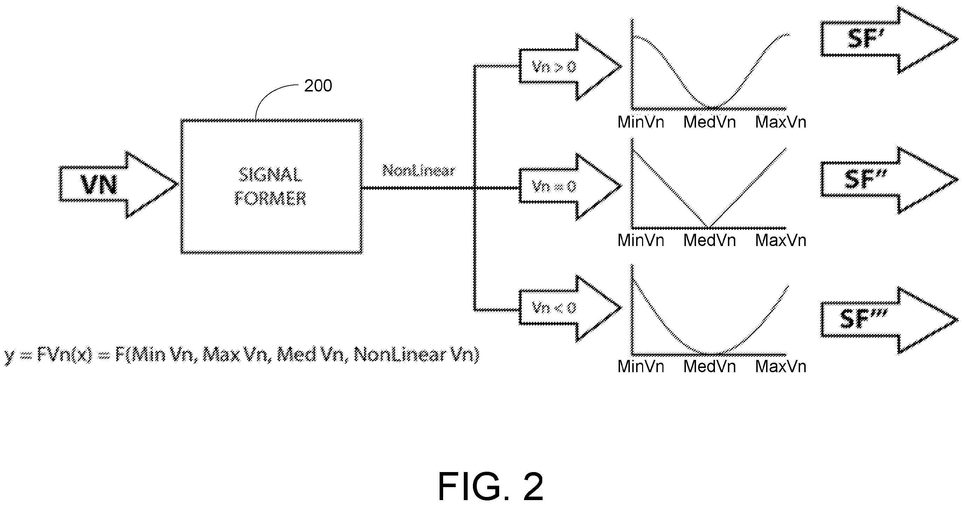

In Figure 2, one describes the component responsible for generating the potential fields defined by the function Fvn. This function should be continuous, with only a minimum value between the intervals of the lowest value configured of the variable and its respective highest value. The minimum value of the function F should be exactly the equilibrium point value of the linguistic variable selected.

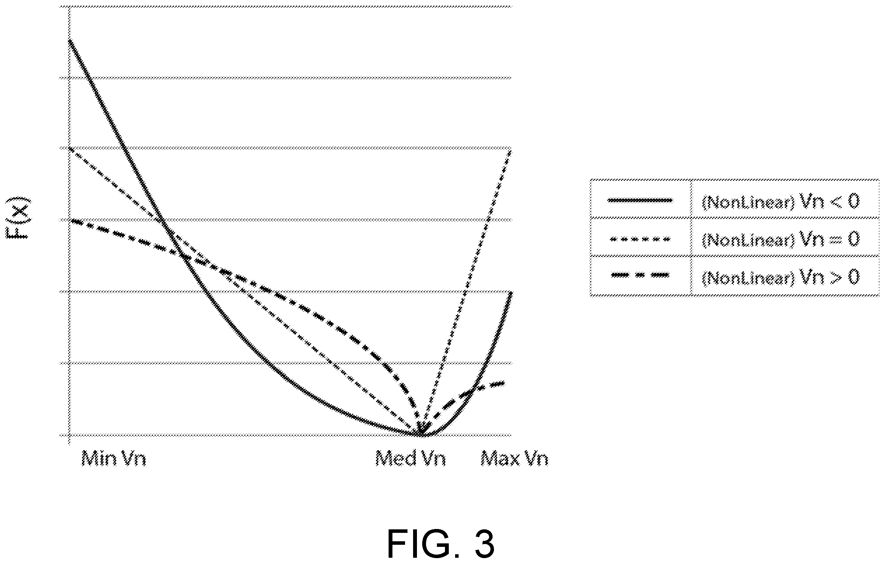

Below is an example for better demonstration of the component function:
The component Signal Former 200 composes the wave function for each linguistic variable according to the parameters: minimum, equilibrium point, maximum and non-linearity degree. This wave function is sent to the next component for carrying out the sampling (also known as quantization) with a view to generate the fuzzy pertinent functions for all the linguistic variables of the fuzzy process controller. It is important to observe a few characteristics: asymmetry between the left side of the speech universe of Figure 3 (between minimum and equilibrium point) and the right side (between equilibrium point and maximum). Another important factor is the non-linearity degree which may be imposed on Fvn(x) through different derivatives between the left side and the right side of the function Fvn(x).

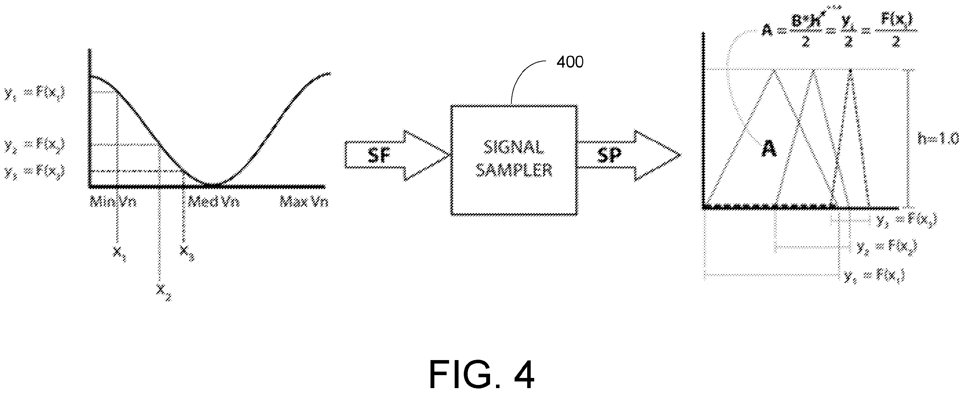

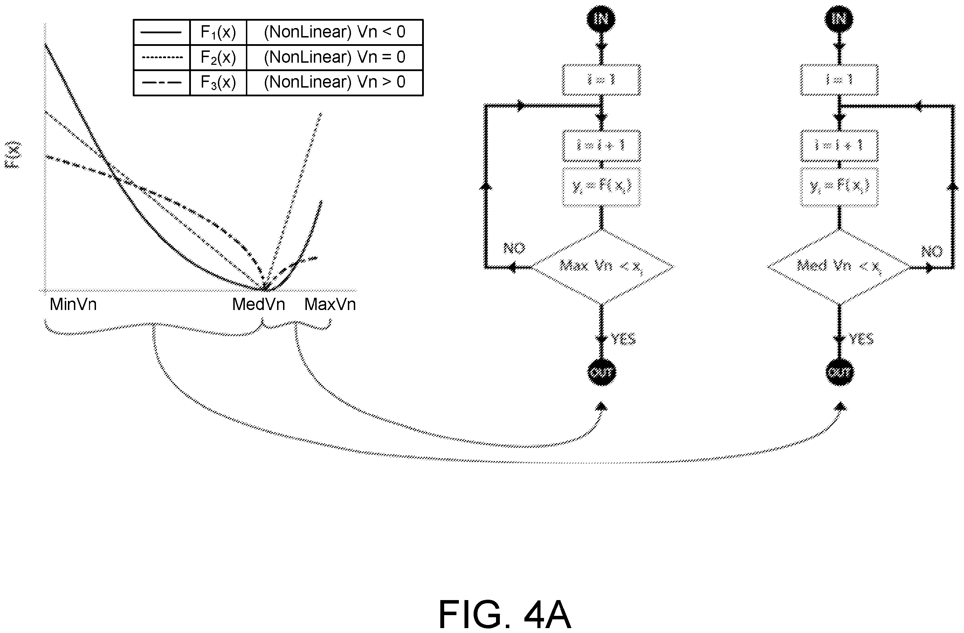

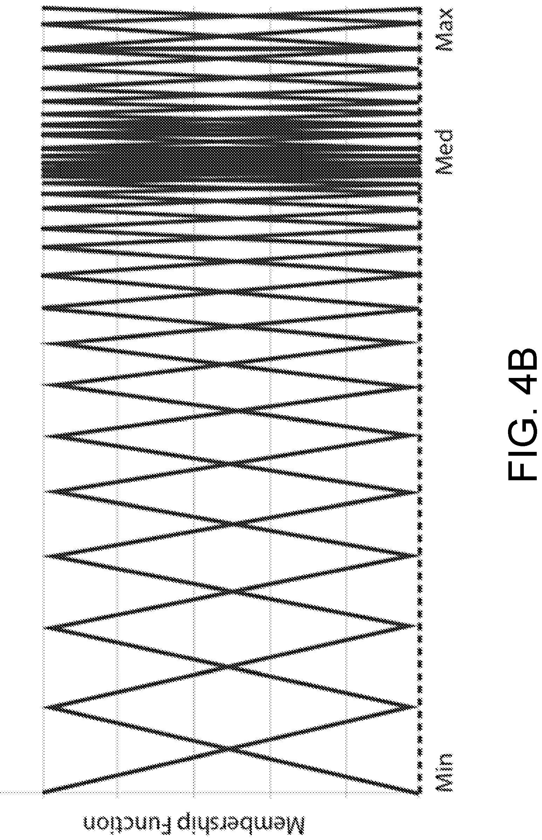

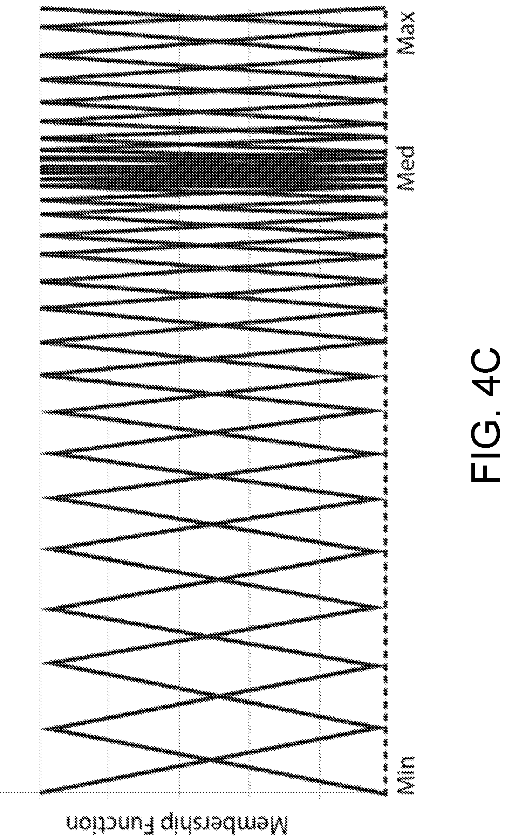

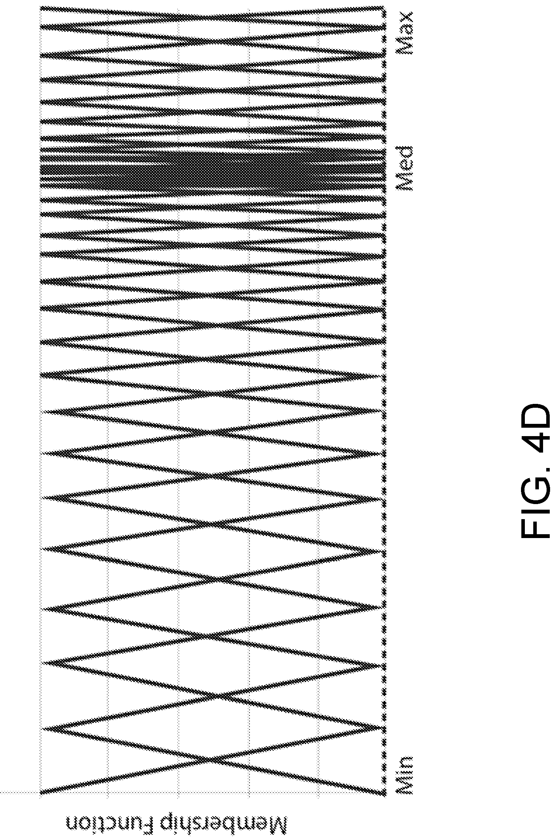

The component Signal Sampler 400 represents the link between the artificial potential field approach and the fuzzy logics. In the proposed example, one presents the membership functions that are shaped as triangular functions with maximum height value equal to 1. Other membership functions such as Gaussian (bell-shaped) ones may be used. All the membership functions sampled from the function Fvn compile a fuzzy set as described in Figure 4.

One presents an example of the sampling in Figure 4A. Two sampling efforts are carried out: one for the left side and the other for the right side. This is necessary because MedVn may be closer to MinVn or MaxVn. It is important to initiate and end each of the linguistic variables with membership functions with a high value. Therefore, in the values MinVn and MaxVn there will be membership functions with value of 1.0 (in the case represented by the first and by the last right triangle). The size of the base of these triangles will be proportional to Fvn(xi), wherein the base of the first right triangle will be proportional to the first sampling on the left Fvn (Min Vn + xi) and the base of the last right triangle will be proportional to the last sampling on the right Fvn (Med Vn +vi).

Interactions in Figure 4A aim at illustrating the process of filling up the other membership functions to fill all the interval of the fuzzy set. By using the maximum of the membership function the value 1.0 (standard in normalizing the fuzzy antecedents) and isosceles triangles, the area of each membership function will be equal to Fvn(xi)/2. This simplification aims at raising the velocity of obtaining the membership functions.

Figures 4B-4D described below show the differences between the membership functions for the configuration parameters of the example proposed, using different values for non-linearity of Fvn. Figure 4B shows the shape of the membership functions for non-linearity of Fvn lower than 0. It is possible to notice that the area of the triangles is rapidly reduced as the approach the MedVn value. Around the MedVn value there is a large number of membership functions, generating high granularity and high resolution around this region. The asymmetry between the left side and the right side causes the area of the membership functions to be reduced more rapidly on the right side than on the left side.

It is possible to generate a linear distribution of the membership functions by only dividing the speech universe (fuzzy set interval) by the desired number of the membership functions. The machine proposed in this innovation decides automatically the number of membership functions with respect to the speech universe as shown in Figure 4C. The number of membership functions follows the same model for nonlinear < 0 and non-linearity > 0. The latter aims at keeping a balance between the granularity necessary for high resolution in the mapping of the speech universe and the time for the resolution of this linguistic variable. The number of membership functions may be different for each linguistic variable and the number of membership functions on the left side of the speech universe (below the equilibrium point value of this linguistic variable) may be different from the number on the right side.

With the increase in the non-linearity value, the granularity increases in values away from the MedVn. This effect can be verified in Figure 4D. More dispersed granularity means a distribution of importance of all the values of the speech universe (to the detriment of a high concentration around the MedVn value, as shown in Figure 4B).

After automatic distribution of the membership functions into fuzzy sets, with the desired granularity, observing the speech universe of all the variables, it is the moment of forming the base rules of the fuzzy knowledge coupled to the inputs of the controller at its outputs.

The previous component has created all the fuzzy sets of the variables selected as shown in Figures 4B, 4C, and 4D. The first phase of the multiplexing component is to separate the reading variables from the writing variables (or input variables from output variables). The Information used for this separation was inserted into the component Input Variables 100, information IN/OUT. In case its value is high, this will be an input of the controller and if its value is low, this will be an output.

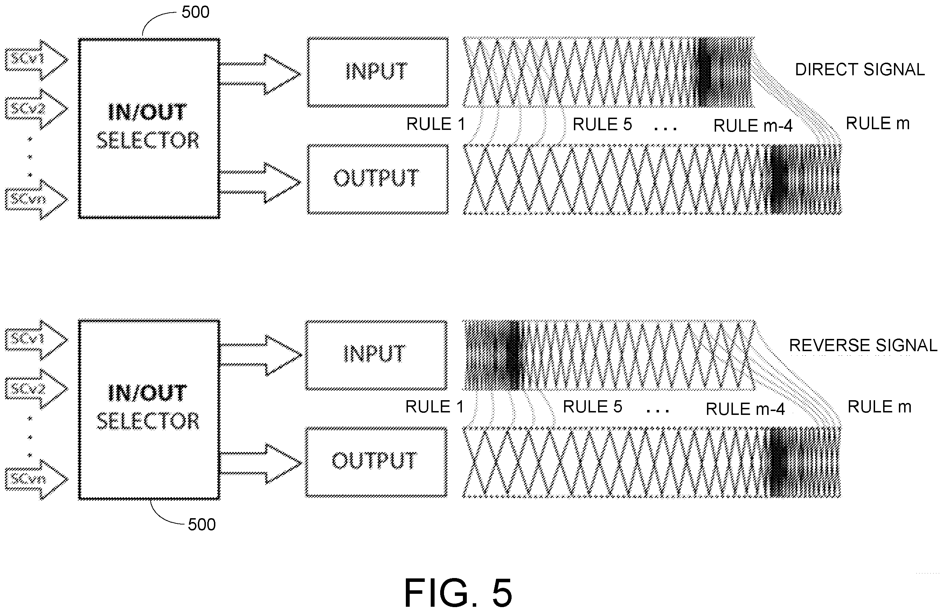

After separation of the controller variables into two groups of variables, input and output groups, this is the moment of forming the fuzzy rules that will compose the knowledge base of the fuzzy controller. For each reading variable, the information DIR/REV supplied to the component Input Variables 100 will be evaluated. If the signal configured for DIR/REV is high, the direction between writing variable and reading variable will be direct, that is to say, low values for input variable will imply lower values for the output variable. If the signal configured for DIR/REV is low, the direction between the writing variable and the reading variable will be reverse, that is to say, low values for input variable will imply higher values for the output variable. If your translate this information to the formation of fuzzy rules, linking between the membership functions of the reading and writing variables means that, in the direct direction, the initial membership functions of the reading variable should be linked to the initial membership functions of the writing variables. On the other hand, in the reverse direction, the initial membership functions of the reading variable are linked to the final variables of the writing variable, as shown in Figure 5.

It is to verify in Figure 5 that the order of the membership functions of the reading variables in the direct direction (upper example) is reversed with respect to the example in the reverse direction (lower example).

The physical effect between the direct or reverse distribution is when the value of a reading variable increases, the value of the writing variable increases (if the direction is direct). If the direction is reverse, when the value of a reading variable increases, the value of the writing variable decreases.

The output of the Multiplex or IN/OUT Selector component 500 represents a strategy of complete fuzzy (CF) advanced process control with multiple inputs and multiple outputs of simple configuration by the user.

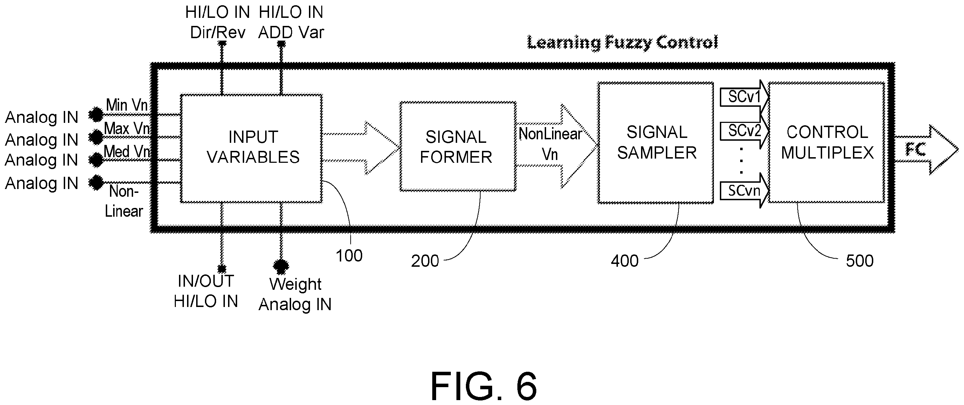

The complete machine can be conceived according to the illustration shown in Figure 6. As can be seen, there are only five analogical configurations and two digital ones for each fuzzy controller variable. The later components are responsible for treating the configurations, creating the membership functions and relating them to fuzzy rules, thus generating a knowledge base usable by a standard fuzzy interpreter, as the FCL.

Present-day industrial processes produce considerably more information than are actually used by the automatic process controllers. Hereinafter one presents three practical applications, where the utilization of Learning Fuzzy Control enabled one to use more of the information made available by the sensors, increasing the efficiency of the process.

Example one: a system for co-generation of energy fed with steam from gas- and biomass-operated boilers. The traditional automated controllers (PID) limit themselves to keeping the pressure of each individual boiler stable and keeping the energy generation load of the turbines. It depends upon the manufacture processes and upon feeding fuel to the boilers, preventing a too great drop in pressure. The control system applied through the Learning Fuzzy Control monitors the following variables: pressure of each boiler, pressure of overall steam, temperature of each furnace, flow of steam of the processes, flow of vapor generated by each boiler, the controller deciding what should be the energy flow to the boilers (gas or biomass). The larger number of monitored variables with respect to the traditional control strategy virtually eliminated the need from intervention of the operator, because the control system anticipates the disturbances and acts preventively in feeding fuel, besides reducing the consumption of gas by 6%, since it favors the biomass boiler, which is more cost-saving, to the detriment of gas boilers. The variation in the steam pressure was reduced by 30%. If the client installs a humidity sensor on the biomass boiler, the performance of the controller would be even higher. The client does not have a history of the reading variables (pressure of each boiler, overall steam pressure, temperature of each furnace, steam flow of the processes, flow of steam generated by each boiler), which makes the training of a fuzzy controller through the data unfeasible. A multivariable fuzzy controller developed manually should have at least five triangular membership functions for each reading variable and one singleton for writing variable. Therefore, eight reading variable (four for each boiler), plus the overall steam pressure generate nine reading variables. Considering the two reading variables with 5 singletons each, they generate 450 (45 membership functions multiplied by 10 reading singletons) rules for complete mapping of the knowledge base. Besides the intense work involved in tuning in the 45 membership functions and the 450 weights (one for each rule), the small number of membership functions increase the tuning-in challenge due to the low resolution of the linguistic variable. The increase in the membership functions contributes to the increment of the robustness of the fuzzy controller.

Description for practical obtainment of the fuzzy controller for a boiler described in the first example:
1) The reading variables (INPUTS) were: boiler pressure and vapor flow. The only writing variable (OUTPUT) was the energy flow into the boiler (biomass or gas).
2) For each variable it is necessary to define which operation is desired, informing the minimum value (MinVn), maximum value (MaxVn), and the medium value (MedVn). At this moment, one also defines the direction between the reading and the writing variables (Dir/Ver) and weight (Weight) of each reading variable on the writing variables.
2.1) The minimum value (MinVn) for the boiler pressure was defined at 43 kgf/cm², the maximum value at 46 kgf/cm², the medium value (MedVn), in this case the setpoint, at 44.5 kgf/cm² and the direction as reverse (Rev). The weight (Weight) proposed for the boiler pressure was 95%.
2.2) The minimum value (MinVn) for each vapor flow was defined at 65 t/h, the maximum value at 80 t/h, the medium value (MedVn) at 75 t/h and the direction as direct (Dir). The weight (Weight) proposed for the flow vapor flow was 55%.
2.3) The minimum value (MinVn) for the energy flow was defined at 5%, the maximum value at 80%, the medium value (MedVn) at 40%. It is not necessary to define the direction of the Outputs.

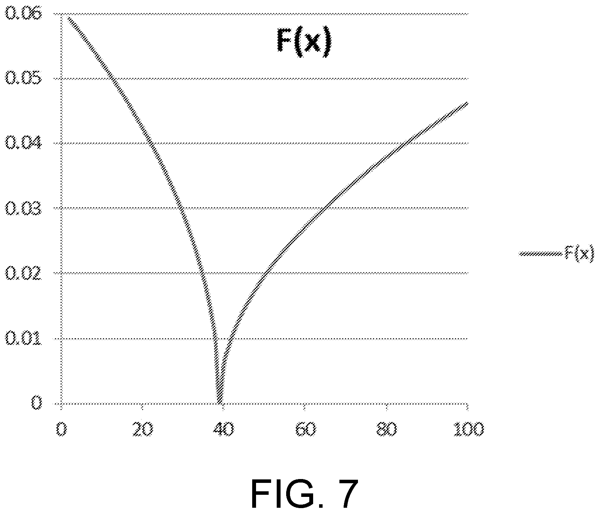

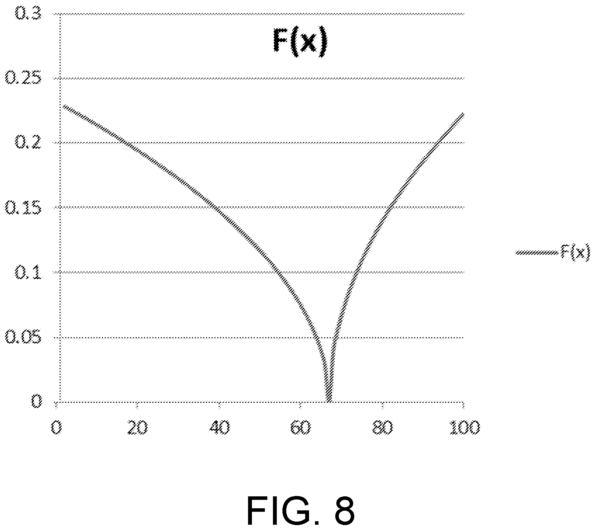

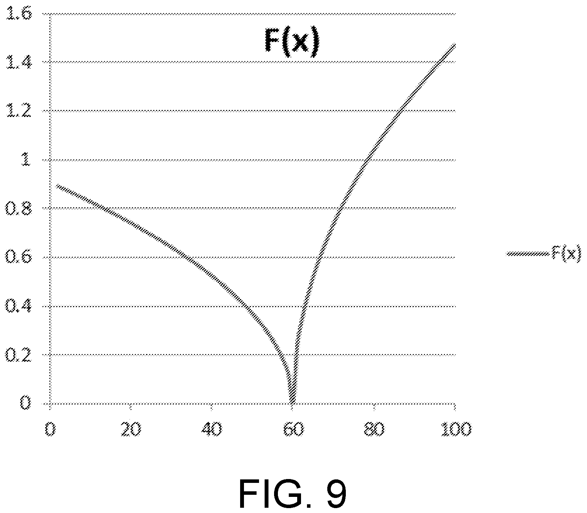

3) The final tuning values will now be presented, the NonLinear values and the weights obtained by evaluating the behavior of the controller with the boiler. FVn(x) curves entered by the Signal Former signal are:
3.1) Boiler pressure with NonLinear parameter is equal to 0.000065. The curve generated is shown in Figure 7.
3.2) Vapor flow with NonLinear parameter is equal to 0.001152. The curve generated is shown in Figure 8.
3.3) Energy flow with NonLinear parameter is equal to 0.033975. The curve generated is shown in Figure 9.

4) The curves presented in 3) are sampled to define the bases of the pertinence functions that will compose the fuzzy sets of each variable. The samplings for each variable carried out by the Signal Sampler are provided in Table 1.

**Table 1**

| Boiler Pressure | | Vapor Flow | | Energy Flow | |
|---|---|---|---|---|---|
| Iteration | Value | Iteration | Value | Iteration | Value |
| 1 | 0.0593 | 1 | 0.2285 | 1 | 0.8930 |
| 2 | 0.0585 | 2 | 0.2267 | 2 | 0.8853 |
| 3 | 0.0577 | 3 | 0.2249 | 3 | 0.8775 |
| 4 | 0.0568 | 4 | 0.2231 | 4 | 0.8696 |
| 5 | 0.0560 | 5 | 0.2213 | 5 | 0.8617 |
| 6 | 0.0551 | 6 | 0.2195 | 6 | 0.8537 |
| 7 | 0.0543 | 7 | 0.2177 | 7 | 0.8456 |
| 8 | 0.0534 | 8 | 0.2158 | 8 | 0.8374 |
| 9 | 0.0525 | 9 | 0.2139 | 9 | 0.8292 |
| 10 | 0.0516 | 10 | 0.2121 | 10 | 0.8208 |
| 11 | 0.0506 | 11 | 0.2102 | 11 | 0.8124 |
| 12 | 0.0497 | 12 | 0.2082 | 12 | 0.8039 |
| 13 | 0.0487 | 13 | 0.2063 | 13 | 0.7953 |
| 14 | 0.0477 | 14 | 0.2043 | 14 | 0.7866 |
| 15 | 0.0467 | 15 | 0.2024 | 15 | 0.7778 |
| 16 | 0.0457 | 16 | 0.2004 | 16 | 0.7689 |
| 17 | 0.0447 | 17 | 0.1984 | 17 | 0.7599 |
| 18 | 0.0436 | 18 | 0.1963 | 18 | 0.7508 |
| 19 | 0.0425 | 19 | 0.1943 | 19 | 0.7416 |
| 20 | 0.0414 | 20 | 0.1922 | 20 | 0.7323 |
| 21 | 0.0402 | 21 | 0.1901 | 21 | 0.7228 |
| 22 | 0.0390 | 22 | 0.1880 | 22 | 0.7133 |
| 23 | 0.0377 | 23 | 0.1858 | 23 | 0.7036 |
| 24 | 0.0365 | 24 | 0.1836 | 24 | 0.6937 |
| 25 | 0.0351 | 25 | 0.1814 | 25 | 0.6837 |
| 26 | 0.0338 | 26 | 0.1792 | 26 | 0.6736 |
| 27 | 0.0323 | 27 | 0.1770 | 27 | 0.6633 |
| 28 | 0.0308 | 28 | 0.1747 | 28 | 0.6529 |
| 29 | 0.0292 | 29 | 0.1724 | 29 | 0.6423 |
| 30 | 0.0276 | 30 | 0.1700 | 30 | 0.6315 |
| 31 | 0.0258 | 31 | 0.1676 | 31 | 0.6205 |
| 32 | 0.0239 | 32 | 0.1652 | 32 | 0.6093 |
| 33 | 0.0218 | 33 | 0.1628 | 33 | 0.5979 |
| 34 | 0.0195 | 34 | 0.1603 | 34 | 0.5863 |
| 35 | 0.0169 | 35 | 0.1578 | 35 | 0.5745 |
| 36 | 0.0138 | 36 | 0.1552 | 36 | 0.5624 |
| 37 | 0.0097 | 37 | 0.1526 | 37 | 0.5500 |
| 38 | 0.0000 | 38 | 0.1499 | 38 | 0.5374 |
| 39 | 0.0059 | 39 | 0.1472 | 39 | 0.5244 |
| 40 | 0.0084 | 40 | 0.1445 | 40 | 0.5111 |
| 41 | 0.0102 | 41 | 0.1417 | 41 | 0.4975 |
| 42 | 0.0118 | 42 | 0.1388 | 42 | 0.4835 |
| 43 | 0.0132 | 43 | 0.1359 | 43 | 0.4690 |
| 44 | 0.0145 | 44 | 0.1329 | 44 | 0.4541 |
| 45 | 0.0157 | 45 | 0.1299 | 45 | 0.4387 |
| 46 | 0.0167 | 46 | 0.1267 | 46 | 0.4228 |
| 47 | 0.0177 | 47 | 0.1235 | 47 | 0.4062 |
| 48 | 0.0187 | 48 | 0.1202 | 48 | 0.3889 |
| 49 | 0.0196 | 49 | 0.1168 | 49 | 0.3708 |
| 50 | 0.0205 | 50 | 0.1133 | 50 | 0.3518 |
| 51 | 0.0213 | 51 | 0.1097 | 51 | 0.3317 |
| 52 | 0.0221 | 52 | 0.1060 | 52 | 0.3102 |
| 53 | 0.0229 | 53 | 0.1022 | 53 | 0.2872 |
| 54 | 0.0237 | 54 | 0.0982 | 54 | 0.2622 |
| 55 | 0.0244 | 55 | 0.0940 | 55 | 0.2345 |
| 56 | 0.0251 | 56 | 0.0896 | 56 | 0.2031 |
| 57 | 0.0258 | 57 | 0.0850 | 57 | 0.1658 |
| 58 | 0.0265 | 58 | 0.0801 | 58 | 0.1173 |
| 59 | 0.0271 | 59 | 0.0750 | 59 | 0.0000 |
| 60 | 0.0277 | 60 | 0.0694 | 60 | 0.2328 |
| 61 | 0.0284 | 61 | 0.0634 | 61 | 0.3292 |
| 62 | 0.0290 | 62 | 0.0567 | 62 | 0.4032 |
| 63 | 0.0296 | 63 | 0.0491 | 63 | 0.4656 |
| 64 | 0.0302 | 64 | 0.0401 | 64 | 0.5206 |
| 65 | 0.0307 | 65 | 0.0283 | 65 | 0.5703 |
| 66 | 0.0313 | 66 | 0.0000 | 66 | 0.6160 |
| 67 | 0.0319 | 67 | 0.0387 | 67 | 0.6585 |
| 68 | 0.0324 | 68 | 0.0548 | 68 | 0.6984 |
| 69 | 0.0329 | 69 | 0.0671 | 69 | 0.7362 |
| 70 | 0.0335 | 70 | 0.0775 | 70 | 0.7721 |
| 71 | 0.0340 | 71 | 0.0866 | 71 | 0.8065 |
| 72 | 0.0345 | 72 | 0.0949 | 72 | 0.8394 |
| 73 | 0.0350 | 73 | 0.1025 | 73 | 0.8711 |
| 74 | 0.0355 | 74 | 0.1095 | 74 | 0.9017 |
| 75 | 0.0360 | 75 | 0.1162 | 75 | 0.9312 |
| 76 | 0.0365 | 76 | 0.1225 | 76 | 0.9599 |
| 77 | 0.0369 | 77 | 0.1285 | 77 | 0.9877 |
| 78 | 0.0374 | 78 | 0.1342 | 78 | 1.0148 |
| 79 | 0.0379 | 79 | 0.1396 | 79 | 1.0412 |
| 80 | 0.0383 | 80 | 0.1449 | 80 | 1.0669 |
| 81 | 0.0388 | 81 | 0.1500 | 81 | 1.0920 |
| 82 | 0.0392 | 82 | 0.1549 | 82 | 1.1165 |
| 83 | 0.0397 | 83 | 0.1597 | 83 | 1.1405 |
| 84 | 0.0401 | 84 | 0.1643 | 84 | 1.1640 |
| 85 | 0.0406 | 85 | 0.1688 | 85 | 1.1871 |
| 86 | 0.0410 | 86 | 0.1732 | 86 | 1.2097 |
| 87 | 0.0414 | 87 | 0.1775 | 87 | 1.2319 |
| 88 | 0.0418 | 88 | 0.1817 | 88 | 1.2537 |
| 89 | 0.0422 | 89 | 0.1857 | 89 | 1.2751 |
| 90 | 0.0427 | 90 | 0.1897 | 90 | 1.2962 |
| 91 | 0.0431 | 91 | 0.1936 | 91 | 1.3170 |
| 92 | 0.0435 | 92 | 0.1975 | 92 | 1.3374 |
| 93 | 0.0439 | 93 | 0.2012 | 93 | 1.3575 |
| 94 | 0.0443 | 94 | 0.2049 | 94 | 1.3773 |
| 95 | 0.0447 | 95 | 0.2086 | 95 | 1.3969 |
| 96 | 0.0451 | 96 | 0.2121 | 96 | 1.4161 |
| 97 | 0.0454 | 97 | 0.2156 | 97 | 1.4351 |
| 98 | 0.0458 | 98 | 0.2191 | 98 | 1.4539 |
| 99 | 0.0462 | 99 | 0.2225 | 99 | 1.4724 |

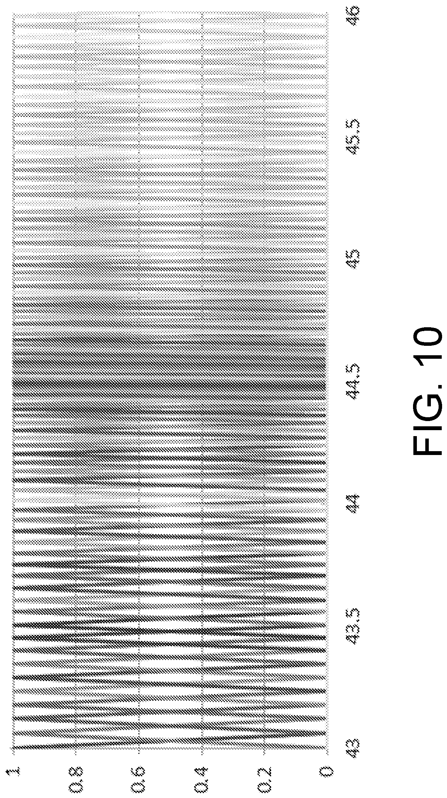

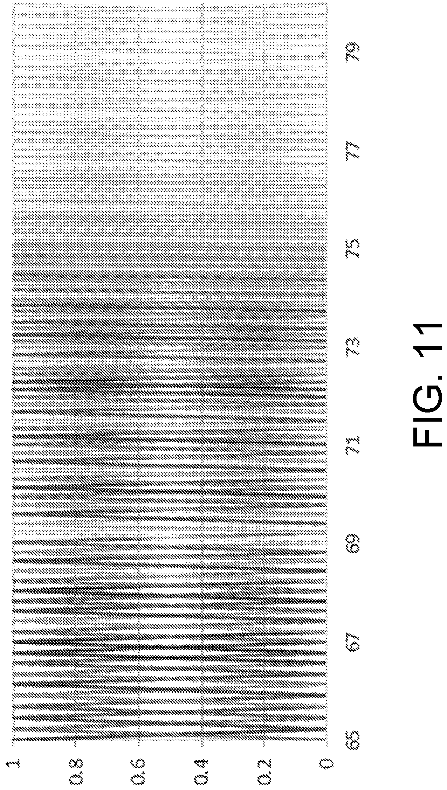

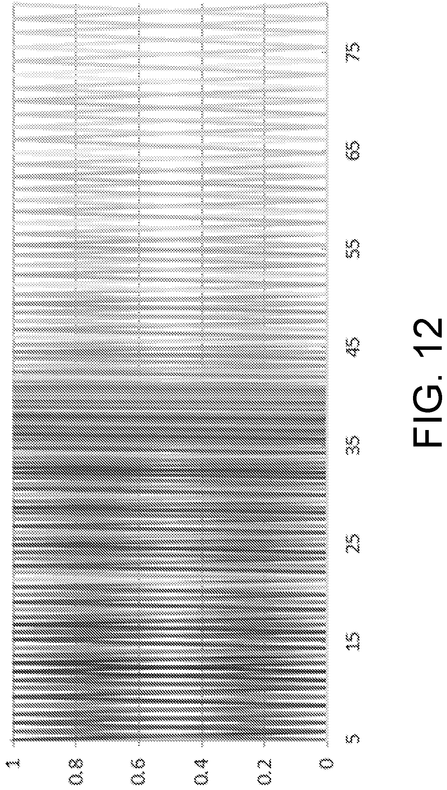

5) The values sampled in 4) are used to form the pertinence functions that compose the fuzzy sets carried out by the component Signal Sampler:
5.1) Fuzzy set of the boiler pressure is shown in Figure 10.
5.2) Fuzzy set of the vapor flow is shown in Figure 11.
5.3) Fuzzy set of the energy flow is shown in Figure 12.

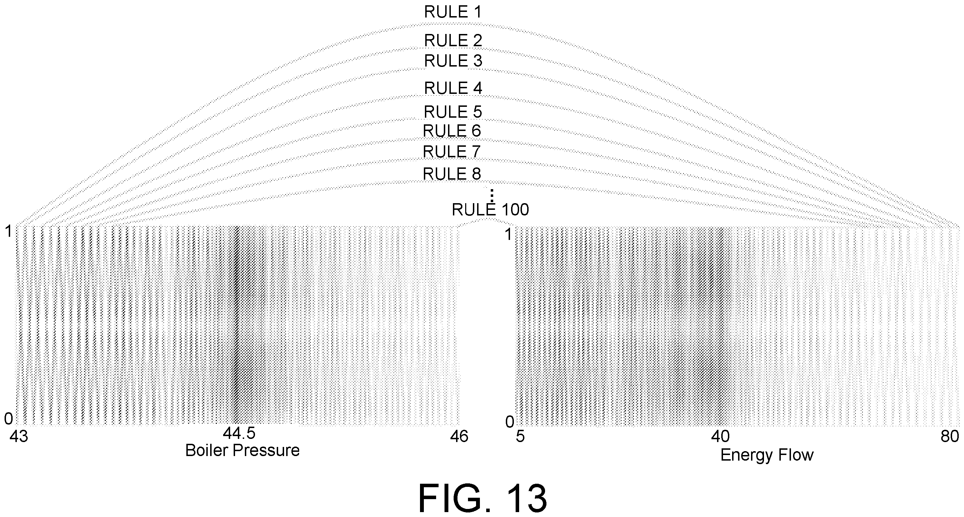

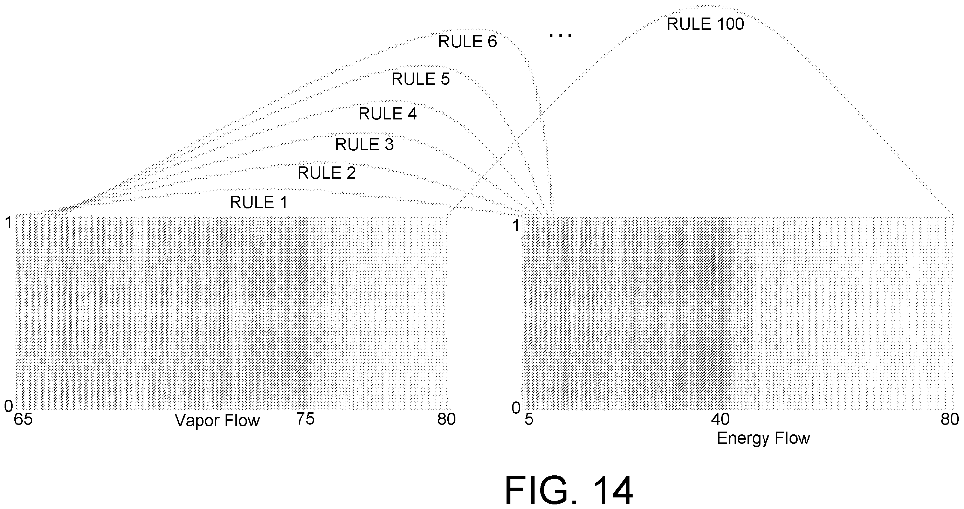

6) With the fuzzy sets defined in (4), the component Control Multiplex maps the INPUTS (boiler pressure and vapor flow) in the OUTPUTS (energy flow). The boiler pressure has reverse direction (Reverse) with respect to the energy flow, since the vapor flow has direct direction (Direct) with respect to the energy flow.
6.1) Mapping of the fuzzy rules between the boiler pressure and the energy flow (reverse direction) is shown in Figure 13.
6.2) Mapping of the fuzzy rules between the vapor flowrate and the energy flow (direct direction) is shown in Figure 14.

7) With the fuzzy rule base mapped in (6), the equipment Learning Fuzzy Control completed the process automatic generation of fuzzy rules. The multivariable controller of industrial processes proposed in this example is available for execution by a fuzzy interpreting module. An example of module is the script interpreter proposed by the specification IEC61131-7, which defines the Fuzzy Control Language (FCL). A possible mapping of the controller generated by the Learning Fuzzy Control compatible with the specification IEC61131-7 is given in Table 2 below.

**Table 2**

| | |
|---|---|
| FUNCTION_BLOCK | |
| | |
| VAR_INPUT | |
| Boiler_Pressure REAL; | |
| Vapor_Flow REAL; | |
| END_VAR | |
| | |
| VAR_OUTPUT | |
| Energy_Flow REAL; | |
| END_VAR | |
| | |
| FUZZIFYBoiler_Pressure | |
| TERM Boiler_Pressure_1 :=(43.00,1)(43.06,0); | |
| TERM Boiler_Pressure_2 :=(43.00,0)(43.06,1)(43.12,0); | |
| TERM Boiler_Pressure_3 :=(43.06,0)(43.12,1)(43.18,0); | |
| TERM Boiler_Pressure_4 :=(43.12,0)(43.18,1)(43.23,0); | |
| TERM Boiler_Pressure_5 :=(43.18,0)(43.23,1)(43.29,0); | |
| TERM Boiler_Pressure_6 :=(43.23,0)(43.29,1)(43.34,0); | |
| TERM Boiler_Pressure_7 :=(43.29,0)(43.34,1)(43.40,0); | |
| TERM Boiler_Pressure_8 :=(43.34,0)(43.40,1)(43.45,0); | |
| TERM Boiler_Pressure_9 :=(43.40,0)(43.45,1)(43.50,0); | |
| TERM Boiler_Pressure_10 :=(43.45,0)(43.50,1)(43.56,0); | |
| TERM Boiler_Pressure_11 :=(43.50,0)(43.56,1)(43.61,0); | |
| TERM Boiler_Pressure_12 :=(43.56,0)(43.61,1)(43.66,0); | |
| TERM Boiler_Pressure_13 :=(43.61,0)(43.66,1)(43.70,0); | |
| TERM Boiler_Pressure_14 :=(43.66,0)(43.70,1)(43.75,0); | |
| TERM Boiler_Pressure_15 :=(43.70,0)(43.75,1)(43.80,0); | |
| TERM Boiler_Pressure_16 :=(43.75,0)(43.80,1)(43.84,0); | |
| TERM Boiler_Pressure_17 :=(43.80,0)(43.84,1)(43.89,0); | |
| TERM Boiler_Pressure_18 :=(43.84,0)(43.89,1)(43.93,0); | |
| TERM Boiler_Pressure_19 :=(43.89,0)(43.93,1)(43.98,0); | |
| TERM Boiler_Pressure_20 :=(43.93,0)(43.98,1)(44.02,0); | |
| TERM Boiler_Pressure_21 :=(43.98,0)(44.02,1)(44.06,0); | |
| TERM Boiler_Pressure_22 :=(44.02,0)(44.06,1)(44.10,0); | |
| TERM Boiler_Pressure_23 :=(44.06,0)(44.10,1)(44.13,0); | |
| TERM Boiler_Pressure_24 :=(44.10,0)(44.13,1)(44.17,0); | |
| TERM Boiler_Pressure_25 :=(44.13,0)(44.17,1)(44.21,0); | |
| TERM Boiler_Pressure_26 :=(44.17,0)(44.21,1)(44.24,0); | |
| TERM Boiler_Pressure_27 :=(44.21,0)(44.24,1)(44.27,0); | |
| TERM Boiler_Pressure_28 :=(44.24,0)(44.27,1)(44.30,0); | |
| TERM Boiler_Pressure_29 :=(44.27,0)(44.30,1)(44.33,0); | |
| TERM Boiler_Pressure_30 :=(44.30,0)(44.33,1)(44.36,0); | |
| TERM Boiler_Pressure_31 :=(44.33,0)(44.36,1)(44.38,0); | |
| TERM Boiler_Pressure_32 :=(44.36,0)(44.38,1)(44.41,0); | |
| TERM Boiler_Pressure_33 :=(44.38,0)(44.41,1)(44.43,0); | |
| TERM Boiler_Pressure_34 :=(44.41,0)(44.43,1)(44.45,0); | |
| TERM Boiler_Pressure_35 :=(44.43,0)(44.45,1)(44.47,0); | |
| TERM Boiler_Pressure_36 :=(44.45,0)(44.47,1)(44.48,0); | |
| TERM Boiler_Pressure_37 :=(44.47,0)(44.48,1)(44.49,0); | |
| TERM Boiler_Pressure_38 :=(44.48,0)(44.49,1)(44.50,0); | |
| TERM Boiler_Pressure_39 :=(44.49,0)(44.50,1)(44.50,0); | |
| TERM Boiler_Pressure_40 :=(44.50,0)(44.50,1)(44.51,0); | |
| TERM Boiler_Pressure_41 :=(44.50,0)(44.51,1)(44.52,0); | |
| TERM Boiler_Pressure_42 :=(44.51,0)(44.52,1)(44.53,0); | |
| TERM Boiler_Pressure_43 :=(44.52,0)(44.53,1)(44.54,0); | |
| TERM Boiler_Pressure_44 :=(44.53,0)(44.54,1)(44.55,0); | |
| TERM Boiler_Pressure_45 :=(44.54,0)(44.55,1)(44.56,0); | |
| TERM Boiler_Pressure_46 :=(44.55,0)(44.56,1)(44.58,0); | |
| TERM Boiler_Pressure_47 :=(44.56,0)(44.58,1)(44.59,0); | |
| TERM Boiler_Pressure_48 :=(44.58,0)(44.59,1)(44.60,0); | |
| TERM Boiler_Pressure_49 :=(44.59,0)(44.60,1)(44.62,0); | |
| TERM Boiler_Pressure_50 :=(44.60,0)(44.62,1)(44.64,0); | |
| TERM Boiler_Pressure_51 :=(44.62,0)(44.64,1)(44.65,0); | |
| TERM Boiler_Pressure_52 :=(44.64,0)(44.65,1)(44.67,0); | |
| TERM Boiler_Pressure_53 :=(44.65,0)(44.67,1)(44.69,0); | |
| TERM Boiler_Pressure_54 :=(44.67,0)(44.69,1)(44.71,0); | |
| TERM Boiler_Pressure_55 :=(44.69,0)(44.71,1)(44.73,0); | |
| TERM Boiler_Pressure_56 :=(44.71,0)(44.73,1)(44.74,0); | |
| TERM Boiler_Pressure_57 :=(44.73,0)(44.74,1)(44.77,0); | |
| TERM Boiler_Pressure_58 :=(44.74,0)(44.77,1)(44.79,0); | |
| TERM Boiler_Pressure_59 :=(44.77,0)(44.79,1)(44.81,0); | |
| TERM Boiler_Pressure_60 :=(44.79,0)(44.81,1)(44.83,0); | |
| TERM Boiler_Pressure_61 :=(44.81,0)(44.83,1)(44.85,0); | |
| TERM Boiler_Pressure_62 :=(44.83,0)(44.85,1)(44.87,0); | |
| TERM Boiler_Pressure_63 :=(44.85,0)(44.87,1)(44.90,0); | |
| TERM Boiler_Pressure_64 :=(44.87,0)(44.90,1)(44.92,0); | |
| TERM Boiler_Pressure_65 :=(44.90,0)(44.92,1)(44.94,0); | |
| TERM Boiler_Pressure_66 :=(44.92,0)(44.94,1)(44.97,0); | |
| TERM Boiler_Pressure_67 :=(44.94,0)(44.97,1)(44.99,0); | |
| TERM Boiler_Pressure_68 :=(44.97,0)(44.99,1)(45.02,0); | |
| TERM Boiler_Pressure_69 :=(44.99,0)(45.02,1)(45.05,0); | |
| TERM Boiler_Pressure_70 :=(45.02,0)(45.05,1)(45.07,0); | |
| TERM Boiler_Pressure_71 :=(45.05,0)(45.07,1)(45.10,0); | |
| TERM Boiler_Pressure_72 :=(45.07,0)(45.10,1)(45.13,0); | |
| TERM Boiler_Pressure_73 :=(45.10,0)(45.13,1)(45.15,0); | |
| TERM Boiler_Pressure_74 :=(45.13,0)(45.15,1)(45.18,0); | |
| TERM Boiler_Pressure_75 :=(45.15,0)(45.18,1)(45.21,0); | |
| TERM Boiler_Pressure_76 :=(45.18,0)(45.21,1)(45.24,0); | |
| TERM Boiler_Pressure_77 :=(45.21,0)(45.24,1)(45.27,0); | |
| TERM Boiler_Pressure_78 :=(45.24,0)(45.27,1)(45.30,0); | |
| TERM Boiler_Pressure_79 :=(45.27,0)(45.30,1)(45.33,0); | |
| TERM Boiler_Pressure_80 :=(45.30,0)(45.33,1)(45.36,0); | |
| TERM Boiler_Pressure_81 :=(45.33,0)(45.36,1)(45.39,0); | |
| TERM Boiler_Pressure_82 :=(45.36,0)(45.39,1)(45.42,0); | |
| TERM Boiler_Pressure_83 :=(45.39,0)(45.42,1)(45.45,0); | |
| TERM Boiler_Pressure_84 :=(45.42,0)(45.45,1)(45.48,0); | |
| TERM Boiler_Pressure_85 :=(45.45,0)(45.48,1)(45.51,0); | |
| TERM Boiler_Pressure_86 :=(45.48,0)(45.51,1)(45.54,0); | |
| TERM Boiler_Pressure_87 :=(45.51,0)(45.54,1)(45.58,0); | |
| TERM Boiler_Pressure_88 :=(45.54,0)(45.58,1)(45.61,0); | |
| TERM Boiler_Pressure_89 :=(45.58,0)(45.61,1)(45.64,0); | |
| TERM Boiler_Pressure_90 :=(45.61,0)(45.64,1)(45.67,0); | |
| TERM Boiler_Pressure_91 :=(45.64,0)(45.67,1)(45.71,0); | |
| TERM Boiler_Pressure_92 :=(45.67,0)(45.71,1)(45.74,0); | |
| TERM Boiler_Pressure_93 :=(45.71,0)(45.74,1)(45.78,0); | |
| TERM Boiler_Pressure_94 :=(45.74,0)(45.78,1)(45.81,0); | |
| TERM Boiler_Pressure_95 :=(45.78,0)(45.81,1)(45.85,0); | |
| TERM Boiler_Pressure_96 :=(45.81,0)(45.85,1)(45.88,0); | |
| TERM Boiler_Pressure_97 :=(45.85,0)(45.88,1)(45.92,0); | |
| TERM Boiler_Pressure_98 :=(45.88,0)(45.92,1)(45.95,0); | |
| TERM Boiler_Pressure_99 :=(45.92,0)(45.95,1)(46.00,0); | |
| TERM Boiler_Pressure_100 := (45.95 , 0) (46.00 , 1) ; | |
| | |
| END_FUZZIFY | |
| FUZZIFY Vapor_Flow | |
| TERM Vapor_Flow_1 :=(65.00,1)(65.23,0); | |
| TERM Vapor_Flow_2 :=(65.00,0)(65.23,1)(65.46,0); | |
| TERM Vapor_Flow_3 :=(65.23,0)(65.46,1)(65.68,0); | |
| TERM Vapor_Flow_4 :=(65.46,0)(65.68,1)(65.90,0); | |
| TERM Vapor_Flow_5 :=(65.68,0)(65.90,1)(66.12,0); | |
| TERM Vapor_Flow_6 :=(65.90,0)(66.12,1)(66.34,0); | |
| TERM Vapor_Flow_7 :=(66.12,0)(66.34,1)(66.56,0); | |
| TERM Vapor_Flow_8 :=(66.34,0)(66.56,1)(66.78,0); | |
| TERM Vapor_Flow_9 :=(66.56,0)(66.78,1)(66.99,0); | |
| TERM Vapor_Flow_10 :=(66.78,0)(66.99,1)(67.20,0); | |
| TERM Vapor_Flow_11 :=(66.99,0)(67.20,1)(67.41,0); | |
| TERM Vapor_Flow_12 :=(67.20,0)(67.41,1)(67.62,0); | |
| TERM Vapor_Flow_13 :=(67.41,0)(67.62,1)(67.83,0); | |
| TERM Vapor_Flow_14 :=(67.62,0)(67.83,1)(68.03,0); | |
| TERM Vapor_Flow_15 :=(67.83,0)(68.03,1)(68.23,0); | |
| TERM Vapor_Flow_16 :=(68.03,0)(68.23,1)(68.44,0); | |
| TERM Vapor_Flow_17 :=(68.23,0)(68.44,1)(68.63,0); | |
| TERM Vapor_Flow_18 :=(68.44,0)(68.63,1)(68.83,0); | |
| TERM Vapor_Flow_19 :=(68.63,0)(68.83,1)(69.02,0); | |
| TERM Vapor_Flow_20 :=(68.83,0)(69.02,1)(69.22,0); | |
| TERM Vapor_Flow_21 :=(69.02,0)(69.22,1)(69.41,0); | |
| TERM Vapor_Flow_22 :=(69.22,0)(69.41,1)(69.59,0); | |
| TERM Vapor_Flow_23 :=(69.41,0)(69.59,1)(69.78,0); | |
| TERM Vapor_Flow_24 :=(69.59,0)(69.78,1)(69.96,0); | |
| TERM Vapor_Flow_25 :=(69.78,0)(69.96,1)(70.15,0); | |
| TERM Vapor_Flow_26 :=(69.96,0)(70.15,1)(70.32,0); | |
| TERM Vapor_Flow_27 :=(70.15,0)(70.32,1)(70.50,0); | |
| TERM Vapor_Flow_28 :=(70.32,0)(70.50,1)(70.68,0); | |
| TERM Vapor_Flow_29 :=(70.50,0)(70.68,1)(70.85,0); | |
| TERM Vapor_Flow_30 :=(70.68,0)(70.85,1)(71.02,0); | |
| TERM Vapor_Flow_31 :=(70.85,0)(71.02,1)(71.19,0); | |
| TERM Vapor_Flow_32 :=(71.02,0)(71.19,1)(71.35,0); | |
| TERM Vapor_Flow_33 :=(71.19,0)(71.35,1)(71.51,0); | |
| TERM Vapor_Flow_34 :=(71.35,0)(71.51,1)(71.67,0); | |
| TERM Vapor_Flow_35 :=(71.51,0)(71.67,1)(71.83,0); | |
| TERM Vapor_Flow_36 :=(71.67,0)(71.83,1)(71.99,0); | |
| TERM Vapor_Flow_37 :=(71.83,0)(71.99,1)(72.14,0); | |
| TERM Vapor_Flow_38 :=(71.99,0)(72.14,1)(72.29,0); | |
| TERM Vapor_Flow_39 :=(72.14,0)(72.29,1)(72.44,0); | |
| TERM Vapor_Flow_40 :=(72.29,0)(72.44,1)(72.58,0); | |
| TERM Vapor_Flow_41 :=(72.44,0)(72.58,1)(72.72,0); | |
| TERM Vapor_Flow_42 :=(72.58,0)(72.72,1)(72.86,0); | |
| TERM Vapor_Flow_43 :=(72.72,0)(72.86,1)(73.00,0); | |
| TERM Vapor_Flow_44 :=(72.86,0)(73.00,1)(73.13,0); | |
| TERM Vapor_Flow_45 :=(73.00,0)(73.13,1)(73.26,0); | |
| TERM Vapor_Flow_46 :=(73.13,0)(73.26,1)(73.39,0); | |
| TERM Vapor_Flow_47 :=(73.26,0)(73.39,1)(73.51,0); | |
| TERM Vapor_Flow_48 :=(73.39,0)(73.51,1)(73.63,0); | |
| TERM Vapor_Flow_49 :=(73.51,0)(73.63,1)(73.75,0); | |
| TERM Vapor_Flow_50 :=(73.63,0)(73.75,1)(73.86,0); | |
| TERM Vapor_Flow_51 :=(73.75,0)(73.86,1)(73.97,0); | |
| TERM Vapor_Flow_52 :=(73.86,0)(73.97,1)(74.08,0); | |
| TERM Vapor_Flow_53 :=(73.97,0)(74.08,1)(74.18,0); | |
| TERM Vapor_Flow_54 :=(74.08,0)(74.18,1)(74.28,0); | |
| TERM Vapor_Flow_55 :=(74.18,0)(74.28,1)(74.37,0); | |
| TERM Vapor_Flow_56 :=(74.28,0)(74.37,1)(74.46,0); | |
| TERM Vapor_Flow_57 :=(74.37,0)(74.46,1)(74.55,0); | |
| TERM Vapor_Flow_58 :=(74.46,0)(74.55,1)(74.63,0); | |
| TERM Vapor_Flow_59 :=(74.55,0)(74.63,1)(74.70,0); | |
| TERM Vapor_Flow_60 :=(74.63,0)(74.70,1)(74.77,0); | |
| TERM Vapor_Flow_61 :=(74.70,0)(74.77,1)(74.83,0); | |
| TERM Vapor_Flow_62 :=(74.77,0)(74.83,1)(74.89,0); | |
| TERM Vapor_Flow_63 :=(74.83,0)(74.89,1)(74.94,0); | |
| TERM Vapor_Flow_64 :=(74.89,0)(74.94,1)(74.98,0); | |
| TERM Vapor_Flow_65 :=(74.94,0)(74.98,1)(75.01,0); | |
| TERM Vapor_Flow_66 :=(74.98,0)(75.01,1)(75.00,0); | |
| TERM Vapor_Flow_67 :=(75.01,0)(75.00,1)(75.04,0); | |
| TERM Vapor_Flow_68 :=(75.00,0)(75.04,1)(75.09,0); | |
| TERM Vapor_Flow_69 :=(75.04,0)(75.09,1)(75.16,0); | |
| TERM Vapor_Flow_70 :=(75.09,0)(75.16,1)(75.24,0); | |
| TERM Vapor_Flow_71 :=(75.16,0)(75.24,1)(75.32,0); | |
| TERM Vapor_Flow_72 :=(75.24,0)(75.32,1)(75.42,0); | |
| TERM Vapor_Flow_73 :=(75.32,0)(75.42,1)(75.52,0); | |
| TERM Vapor_Flow_74 :=(75.42,0)(75.52,1)(75.63,0); | |
| TERM Vapor_Flow_75 :=(75.52,0)(75.63,1)(75.75,0); | |
| TERM Vapor_Flow_76 :=(75.63,0)(75.75,1)(75.87,0); | |
| TERM Vapor_Flow_77 :=(75.75,0)(75.87,1)(76.00,0); | |
| TERM Vapor_Flow_78 :=(75.87,0)(76.00,1)(76.13,0); | |
| TERM Vapor_Flow_79 :=(76.00,0)(76.13,1)(76.27,0); | |
| TERM Vapor_Flow_80 :=(76.13,0)(76.27,1)(76.42,0); | |
| TERM Vapor_Flow_81 :=(76.27,0)(76.42,1)(76.57,0); | |
| TERM Vapor_Flow_82 :=(76.42,0)(76.57,1)(76.72,0); | |
| TERM Vapor_Flow_83 :=(76.57,0)(76.72,1)(76.88,0); | |
| TERM Vapor_Flow_84 :=(76.72,0)(76.88,1)(77.05,0); | |
| TERM Vapor_Flow_85 :=(76.88,0)(77.05,1)(77.22,0); | |
| TERM Vapor_Flow_86 :=(77.05,0)(77.22,1)(77.39,0); | |
| TERM Vapor_Flow_87 :=(77.22,0)(77.39,1)(77.57,0); | |
| TERM Vapor_Flow_88 :=(77.39,0)(77.57,1)(77.75,0); | |
| TERM Vapor_Flow_89 :=(77.57,0)(77.75,1)(77.93,0); | |
| TERM Vapor_Flow_90 :=(77.75,0)(77.93,1)(78.12,0); | |
| TERM Vapor_Flow_91 :=(77.93,0)(78.12,1)(78.32,0); | |
| TERM Vapor_Flow_92 :=(78.12,0)(78.32,1)(78.51,0); | |
| TERM Vapor_Flow_93 :=(78.32,0)(78.51,1)(78.72,0); | |
| TERM Vapor_Flow_94 := (78.51,0)(78.72,1)(78.92,0); | |
| TERM Vapor_Flow_95 := (78.72,0)(78.92,1)(79.13,0); | |
| TERM Vapor_Flow_96 := (78.92,0)(79.13,1)(79.34,0); | |
| TERM Vapor_Flow_97 := (79.13,0)(79.34,1)(79.56,0); | |
| TERM Vapor_Flow_98 := (79.34,0)(79.56,1)(79.78,0); | |
| TERM Vapor_Flow_99 := (79.56,0)(79.78,1)(80.00,0); | |
| TERM Vapor_Flow_100 := (79.78,0)(80.00,1); | |
| END_FUZZIFY | |
| | |
| DEFUZZIFY Energy_Flow | |
| TERM Energy_Flow_1 := (5.00,1)(5.89,0); | |
| TERM Energy_Flow_2 := (5.00,0)(5.89,1)(6.78,0); | |
| TERM Energy_Flow_3 := (5.89,0)(6.78,1)(7.66,0); | |
| TERM Energy_Flow_4 := (6.78,0)(7.66,1)(8.53,0); | |
| TERM Energy_Flow_5 := (7.66,0)(8.53,1)(9.39,0); | |
| TERM Energy_Flow_6 := (8.53,0)(9.39,1)(10.24,0); | |
| TERM Energy_Flow_7 := (9.39,0)(10.24,1) (11.09,0); | |
| TERM Energy_Flow_8 := (10.24,0)(11.09,1)(11.92,0); | |
| TERM Energy_Flow_9 := (11.09,0)(11.92,1)(12.75,0); | |
| TERM Energy_Flow_10 := (11.92,0)(12.75,1)(13.57,0); | |
| TERM Energy_Flow_11 := (12.75,0)(13.57,1)(14.39,0); | |
| TERM Energy_Flow_12 := (13.57,0)(14.39,1)(15.19,0); | |
| TERM Energy_Flow_13 := (14.39,0)(15.19,1)(15.99,0); | |
| TERM Energy_Flow_14 := (15.19,0)(15.99,1)(16.77,0); | |
| TERM Energy_Flow_15 := (15.99,0)(16.77,1)(17.55,0); | |
| TERM Energy_Flow_16 := (16.77,0)(17.55,1)(18.32,0); | |
| TERM Energy_Flow_17 := (17.55,0)(18.32,1)(19.08,0); | |
| TERM Energy_Flow_18 := (18.32,0)(19.08,1)(19.83,0); | |
| TERM Energy_Flow_19 := (19.08,0)(19.83,1)(20.57,0); | |
| TERM Energy_Flow_20 := (19.83 ,0)(20.57,1)(21.30 ,0); | |
| TERM Energy_Flow_21 := (20.57,0)(21.30,1)(22.03,0); | |
| TERM Energy_Flow_22 := (21.30,0)(22.03,1)(22.74,0); | |
| TERM Energy_Flow_23 := (22.03,0)(22.74,1)(23.44,0); | |
| TERM Energy_Flow_24 := (22.74,0)(23.44,1)(24.14,0); | |
| TERM Energy_Flow_25 := (23.44 ,0)(24.14,1)(24.82,0); | |
| TERM Energy_Flow_26 := (24.14,0)(24.82,1)(25.49,0); | |
| TERM Energy_Flow_27 := (24.82,0)(25.49,1)(26.16,0); | |
| TERM Energy_Flow_28 := (25.49,0)(26.16,1)(26.81,0); | |
| TERM Energy_Flow_29 := (26.16,0)(26.81,1)(27.45,0); | |
| TERM Energy_Flow_30 := (26.81,0)(27.45,1)(28.08,0); | |
| TERM Energy_Flow_31 := (27.45,0)(28.08,1)(28.70,0); | |
| TERM Energy_Flow_32 := (28.08,0)(28.70,1)(29.31,0); | |
| TERM Energy_Flow_33 := (28.70,0)(29.31,1)(29.91,0); | |
| TERM Energy_Flow 34 := (29.31,0)(29.91,1)(30.50,0); | |
| TERM Energy_Flow 35 := (29.91,0)(30.50,1)(31.07,0); | |
| TERM Energy_Flow 36 := (30.50,0)(31.07,1)(31.63,0); | |
| TERM Energy_Flow_37 := (31.07,0)(31.63,1)(32.18,0); | |
| TERM Energy_Flow_38 := (31.63,0)(32.18,1)(32.72,0); | |
| TERM Energy_Flow_39 := (32.18,0)(32.72,1)(33.25,0); | |
| TERM Energy_Flow_40 := (32.72,0)(33.25,1)(33.76,0); | |
| TERM Energy_Flow_41 := (33.25,0)(33.76,1)(34.26,0); | |
| TERM Energy_Flow_42 := (33.76,0)(34.26,1)(34.74,0); | |
| TERM Energy_Flow_43 := (34.26,0)(34.74,1)(35.21,0); | |
| TERM Energy_Flow_44 := (34.74,0)(35.21,1)(35.66,0); | |
| TERM Energy_Flow_45 := (35.21,0)(35.66,1)(36.10,0); | |
| TERM Energy_Flow_46 := (35.66,0)(36.10,1)(36.52,0); | |
| TERM Energy_Flow_47 := (36.10,0)(36.52,1)(36.93,0); | |
| TERM Energy_Flow_48 := (36.52,0)(36.93,1)(37.32,0); | |
| TERM Energy_Flow_49 := (36.93,0)(37.32,1)(37.69,0); | |
| TERM Energy_Flow_50 := (37.32,0)(37.69,1)(38.04,0); | |
| TERM Energy_Flow_51 := (37.69,0)(38.04,1)(38.37,0); | |
| TERM Energy_Flow_52 := (38.04,0)(38.37,1)(38.68,0); | |
| TERM Energy_Flow_53 := (38.37,0)(38.68,1)(38.97,0); | |
| TERM Energy_Flow_54 := (38.68,0)(38.97,1)(39.23,0); | |
| TERM Energy_Flow_55 := (38.97,0)(39.23,1)(39.47,0); | |
| TERM Energy_Flow_56 := (39.23,0)(39.47,1)(39.67,0); | |
| TERM Energy_Flow_57 := (39.47,0)(39.67,1)(39.84,0); | |
| TERM Energy_Flow_58 := (39.67,0)(39.84,1)(39.95,0); | |
| TERM Energy_Flow_59 := (39.84,0)(39.95,1)(40.00,0); | |
| TERM Energy_Flow_60 := (39.95,0)(40.00,1)(40.23 ,0); | |
| TERM Energy_Flow_61 := (40.00,0)(40.23,1)(40.56,0); | |
| TERM Energy_Flow_62 := (40.23,0)(40.56,1)(40.97,0); | |
| TERM Energy_Flow_63 := (40.56,0)(40.97,1)(41.43,0); | |
| TERM Energy_Flow_64 := (40.97,0)(41.43,1)(41.95,0); | |
| TERM Energy_Flow_65 := (41.43,0)(41.95,1)(42.52,0); | |
| TERM Energy_Flow_66 := (41.95,0)(42.52,1)(43.14,0); | |
| TERM Energy_Flow_67 := (42.52,0)(43.14,1)(43.80,0); | |
| TERM Energy_Flow_68 := (43.14,0)(43.80,1)(44.49,0); | |
| TERM Energy_Flow_69 := (43.80,0)(44.49,1)(45.23,0); | |
| TERM Energy_Flow_70 := (44.49,0)(45.23,1)(46.00,0); | |
| TERM Energy_Flow_71 := (45.23,0)(46.00,1)(46.81,0); | |
| TERM Energy_Flow_72 := (46.00,0)(46.81,1)(47.65,0); | |
| TERM Energy_Flow_73 := (46.81,0)(47.65,1)(48.52,0); | |
| TERM Energy_Flow_74 := (47.65,0)(48.52,1)(49.42,0); | |
| TERM Energy_Flow_75 := (48.52,0)(49.42,1)(50.35,0); | |
| TERM Energy_Flow_76 := (49.42,0)(50.35,1)(51.31,0); | |
| TERM Energy_Flow_77 := (50.35,0)(51.31,1)(52.30,0); | |
| TERM Energy_Flow_78 := (51.31,0)(52.30,1)(53.32,0); | |
| TERM Energy_Flow_79 := (52.30,0)(53.32,1)(54.36,0); | |
| TERM Energy_Flow_80 := (53.32,0)(54.36,1)(55.42,0); | |
| TERM Energy_Flow_81 := (54.36,0)(55.42,1)(56.52,0); | |
| TERM Energy_Flow_82 := (55.42,0)(56.52,1)(57.63,0); | |
| TERM Energy_Flow_83 := (56.52,0)(57.63,1)(58.77,0); | |
| TERM Energy_Flow_84 := (57.63,0)(58.77,1)(59.94,0); | |
| TERM Energy_Flow_85 := (58.77,0)(59.94,1)(61.12,0); | |
| TERM Energy_Flow_86 := (59.94,0)(61.12,1)(62.33,0); | |
| TERM Energy_Flow_87 := (61.12,0)(62.33,1)(63.57,0); | |
| TERM Energy_Flow_88 := (62.33,0)(63.57,1)(64.82,0); | |
| TERM Energy_Flow_89 := (63.57,0)(64.82,1)(66.09 ,0); | |
| TERM Energy_Flow_90 := (64.82,0)(66.09,1)(67.39,0); | |
| TERM Energy_Flow_91 := (66.09,0)(67.39,1)(68.71,0); | |
| TERM Energy_Flow_92 := (67.39,0)(68.71,1)(70.04,0); | |
| TERM Energy_Flow_93 := (68.71,0)(70.04,1)(71.40,0); | |
| TERM Energy_Flow_94 := (70.04,0)(71.40,1)(72.78,0); | |
| TERM Energy_Flow_95 := (71.40,0)(72.78,1)(74.18,0); | |
| TERM Energy_Flow_96 := (72.78,0)(74.18,1)(75.59,0); | |
| TERM Energy_Flow_97 := (74.18,0)(75.59,1)(77.03,0); | |
| TERM Energy_Flow_98 := (75.59,0)(77.03,1)(78.48,0); | |
| TERM Energy_Flow_99 := (77.03,0)(78.48,1)(80.00,0); | |
| TERM Energy_Flow_100 := (78.48,0)(80.00,1); | |
| | |
| METHOD: CoG; | |
| | |
| END_DEFUZZIFY | |
| | |
| RULEBLOCK Example | |
| AND:MIN; | |
| ACCU:MAX; | |
| | |
| RULE 1 : IF Boiler_Pressure IS Boiler_Pressure_100 THEN Energy_Flow IS Energy_Flow_1 WITH 0.95 ; | |
| RULE 2 : IF Boiler_Pressure IS Boiler_Pressure_99 THEN Energy_Flow IS Energy_Flow_2 WITH 0.95 ; | |
| RULE 3 : IF Boiler_Pressure IS Boiler_Pressure_98 THEN Energy_Flow IS Energy_Flow_3 WITH 0.95 ; | |
| RULE 4 : IF Boiler_Pressure IS Boiler_Pressure_97 THEN Energy_Flow IS Energy_Flow_4 WITH 0.95 ; | |
| RULE 5 : IF Boiler_Pressure IS Boiler_Pressure_96 THEN Energy_Flow IS Energy_Flow_5 WITH 0.95 ; | |
| RULE 6 : IF Boiler_Pressure IS Boiler_Pressure_95 THEN Energy_Flow IS Energy_Flow_6 WITH 0.95 ; | |
| RULE 7 : IF Boiler_Pressure IS Boiler_Pressure_94 THEN Energy_Flow IS Energy_Flow_7 WITH 0.95 ; | |
| RULE 8 : IF Boiler_Pressure IS Boiler_Pressure_93 THEN Energy_Flow IS Energy_Flow_8 WITH 0.95 ; | |
| RULE 9 : IF Boiler_Pressure IS Boiler_Pressure_92 THEN Energy_Flow IS Energy_Flow_9 WITH 0.95 ; | |
| RULE 10 : IF Boiler_Pressure IS Boiler_Pressure_91 THEN Energy_Flow IS Energy_Flow_10 WITH 0.95 ; | |
| RULE 11 : IF Boiler_Pressure IS Boiler_Pressure_90 THEN Energy_Flow IS Energy_Flow_11 WITH 0.95 ; | |
| RULE 12 : IF Boiler_Pressure IS Boiler_Pressure_89 THEN Energy_Flow IS Energy_Flow_12 WITH 0.95 ; | |
| RULE 13 : IF Boiler_Pressure IS Boiler_Pressure_88 THEN Energy_Flow IS Energy_Flow_13 WITH 0.95 ; | |
| RULE 14 : IF Boiler_Pressure IS Boiler_Pressure_87 THEN Energy_Flow IS Energy_Flow_14 WITH 0.95 ; | |
| RULE 15 : IF Boiler_Pressure IS Boiler_Pressure_86 THEN Energy_Flow IS Energy_Flow_15 WITH 0.95 ; | |
| RULE 16 : IF Boiler_Pressure IS Boiler_Pressure_85 THEN Energy_Flow IS Energy_Flow_16 WITH 0.95 ; | |
| RULE 17 : IF Boiler_Pressure IS Boiler_Pressure_84 THEN Energy_Flow IS Energy_Flow_17 WITH 0.95 ; | |
| RULE 18 : IF Boiler_Pressure IS Boiler_Pressure_83 THEN Energy_Flow IS Energy_Flow_18 WITH 0.95 ; | |
| RULE 19 : IF Boiler_Pressure IS Boiler_Pressure_82 THEN Energy_Flow IS Energy_Flow_19 WITH 0.95 ; | |
| RULE 20 : IF Boiler_Pressure IS Boiler_Pressure_81 THEN Energy_Flow IS Energy_Flow_20 WITH 0.95 ; | |
| RULE 21 : IF Boiler_Pressure IS Boiler_Pressure_80 THEN Energy_Flow IS Energy_Flow_21 WITH 0.95 ; | |
| RULE 22 : IF Boiler_Pressure IS Boiler_Pressure_79 THEN Energy_Flow IS Energy_Flow_22 WITH 0.95 ; | |
| RULE 23 : IF Boiler_Pressure IS Boiler_Pressure_78 THEN Energy_Flow IS Energy_Flow_23 WITH 0.95 ; | |
| RULE 24 : IF Boiler_Pressure IS Boiler_Pressure_77 THEN Energy_Flow IS Energy_Flow_24 WITH 0.95 ; | |
| RULE 25 : IF Boiler_Pressure IS Boiler_Pressure_76 THEN Energy_Flow IS Energy_Flow_25 WITH 0.95 ; | |
| RULE 26 : IF Boiler_Pressure IS Boiler_Pressure_75 THEN Energy_Flow IS Energy_Flow_26 WITH 0.95 ; | |
| RULE 27 : IF Boiler_Pressure IS Boiler_Pressure_74 THEN Energy_Flow IS Energy_Flow_27 WITH 0.95 ; | |
| RULE 28 : IF Boiler_Pressure IS Boiler_Pressure_73 THEN Energy_Flow IS Energy_Flow_28 WITH 0.95 ; | |
| RULE 29 : IF Boiler_Pressure IS Boiler_Pressure_72 THEN Energy_Flow IS Energy_Flow_29 WITH 0.95 ; | |
| RULE 30 : IF Boiler_Pressure IS Boiler_Pressure_71 THEN Energy_Flow IS Energy_Flow_30 WITH 0.95 ; | |
| RULE 31 : IF Boiler_Pressure IS Boiler_Pressure_70 THEN Energy_Flow IS Energy_Flow_31 WITH 0.95 ; | |
| RULE 32 : IF Boiler_Pressure IS Boiler_Pressure_69 THEN Energy_Flow IS Energy_Flow_32 WITH 0.95 ; | |
| RULE 33 : IF Boiler_Pressure IS Boiler_Pressure_68 THEN Energy_Flow IS Energy_Flow_33 WITH 0.95 ; | |
| RULE 34 : IF Boiler_Pressure IS Boiler_Pressure_67 THEN Energy_Flow IS Energy_Flow_34 WITH 0.95 ; | |
| RULE 35 : IF Boiler_Pressure IS Boiler_Pressure_66 THEN Energy_Flow IS Energy_Flow_35 WITH 0.95 ; | |
| RULE 36 : IF Boiler_Pressure IS Boiler_Pressure_65 THEN Energy_Flow IS Energy_Flow_36 WITH 0.95 ; | |
| RULE 37 : IF Boiler_Pressure IS Boiler_Pressure_64 THEN Energy_Flow IS Energy_Flow_37 WITH 0.95 ; | |
| RULE 38 : IF Boiler_Pressure IS Boiler_Pressure_63 THEN Energy_Flow IS Energy_Flow_38 WITH 0.95 ; | |
| RULE 39 : IF Boiler_Pressure IS Boiler_Pressure_62 THEN Energy_Flow IS Energy_Flow_39 WITH 0.95 ; | |
| RULE 40 : IF Boiler_Pressure IS Boiler_Pressure_61 THEN Energy_Flow IS Energy_Flow_40 WITH 0.95 ; | |
| RULE 41 : IF Boiler_Pressure IS Boiler_Pressure_60 THEN Energy_Flow IS Energy_Flow_41 WITH 0.95 ; | |
| RULE 42 : IF Boiler_Pressure IS Boiler_Pressure_59 THEN Energy_Flow IS Energy_Flow_42 WITH 0.95 ; | |
| RULE 43 : IF Boiler_Pressure IS Boiler_Pressure_58 THEN Energy_Flow IS Energy_Flow_43 WITH 0.95 ; | |
| RULE 44 : IF Boiler_Pressure IS Boiler_Pressure_57 THEN Energy_Flow IS Energy_Flow_44 WITH 0.95 ; | |
| RULE 45 : IF Boiler_Pressure IS Boiler_Pressure_56 THEN Energy_Flow IS Energy_Flow_45 WITH 0.95 ; | |
| RULE 46 : IF Boiler_Pressure IS Boiler_Pressure_55 THEN Energy_Flow IS Energy_Flow_46 WITH 0.95 ; | |
| RULE 47 : IF Boiler_Pressure IS Boiler_Pressure_54 THEN Energy_Flow IS Energy_Flow_47 WITH 0.95 ; | |
| RULE 48 : IF Boiler_Pressure IS Boiler_Pressure_53 THEN Energy_Flow IS Energy_Flow_48 WITH 0.95 ; | |
| RULE 49 : IF Boiler_Pressure IS Boiler_Pressure_52 THEN Energy_Flow IS Energy_Flow_49 WITH 0.95 ; | |
| RULE 50 : IF Boiler_Pressure IS Boiler_Pressure_51 THEN Energy_Flow IS Energy_Flow_50 WITH 0.95 ; | |
| RULE 51 : IF Boiler_Pressure IS Boiler_Pressure_50 THEN Energy_Flow IS Energy_Flow_51 WITH 0.95 ; | |
| RULE 52 : IF Boiler_Pressure IS Boiler_Pressure_49 THEN Energy_Flow IS Energy_Flow_52 WITH 0.95 ; | |
| RULE 53 : IF Boiler_Pressure IS Boiler_Pressure_48 THEN Energy_Flow IS Energy_Flow_53 WITH 0.95 ; | |
| RULE 54 : IF Boiler_Pressure IS Boiler_Pressure_47 THEN Energy_Flow IS Energy_Flow_54 WITH 0.95 ; | |
| RULE 55 : IF Boiler_Pressure IS Boiler_Pressure_46 THEN Energy_Flow IS Energy_Flow_55 WITH 0.95 ; | |
| RULE 56 : IF Boiler_Pressure IS Boiler_Pressure_45 THEN Energy_Flow IS Energy_Flow_56 WITH 0.95 ; | |
| RULE 57 : IF Boiler_Pressure IS Boiler_Pressure_44 THEN Energy_Flow IS Energy_Flow_57 WITH 0.95 ; | |
| RULE 58 : IF Boiler_Pressure IS Boiler_Pressure_43 THEN Energy_Flow IS Energy_Flow_58 WITH 0.95 ; | |
| RULE 59 : IF Boiler_Pressure IS Boiler_Pressure_42 THEN Energy_Flow IS Energy_Flow_59 WITH 0.95 ; | |
| RULE 60 : IF Boiler_Pressure IS Boiler_Pressure_41 THEN Energy_Flow IS Energy_Flow_60 WITH 0.95 ; | |
| RULE 61 : IF Boiler_Pressure IS Boiler_Pressure_40 THEN Energy_Flow IS Energy_Flow_61 WITH 0.95 ; | |
| RULE 62 : IF Boiler_Pressure IS Boiler_Pressure_39 THEN Energy_Flow IS Energy_Flow_62 WITH 0.95 ; | |
| RULE 63 : IF Boiler_Pressure IS Boiler_Pressure_38 THEN Energy_Flow IS Energy_Flow_63 WITH 0.95 ; | |
| RULE 64 : IF Boiler_Pressure IS Boiler_Pressure_37 THEN Energy_Flow IS Energy_Flow_64 WITH 0.95 ; | |
| RULE 65 : IF Boiler_Pressure IS Boiler_Pressure_36 THEN Energy_Flow IS Energy_Flow_65 WITH 0.95 ; | |
| RULE 66 : IF Boiler_Pressure IS Boiler_Pressure_35 THEN Energy_Flow IS Energy_Flow_66 WITH 0.95 ; | |
| RULE 67 : IF Boiler_Pressure IS Boiler_Pressure_34 THEN Energy_Flow IS Energy_Flow_67 WITH 0.95 ; | |
| RULE 68 : IF Boiler_Pressure IS Boiler_Pressure_33 THEN Energy_Flow IS Energy_Flow_68 WITH 0.95 ; | |
| RULE 69 : IF Boiler_Pressure IS Boiler_Pressure_32 THEN Energy_Flow IS Energy_Flow_69 WITH 0.95 ; | |
| RULE 70 : IF Boiler_Pressure IS Boiler_Pressure_31 THEN Energy_Flow IS Energy_Flow_70 WITH 0.95 ; | |
| RULE 71 : IF Boiler_Pressure IS Boiler_Pressure_30 THEN Energy_Flow IS Energy_Flow_71 WITH 0.95 ; | |
| RULE 72 : IF Boiler_Pressure IS Boiler_Pressure_29 THEN Energy_Flow IS Energy_Flow_72 WITH 0.95 ; | |
| RULE 73 : IF Boiler_Pressure IS Boiler_Pressure_28 THEN Energy_Flow IS Energy_Flow_73 WITH 0.95 ; | |
| RULE 74 : IF Boiler_Pressure IS Boiler_Pressure_27 THEN Energy_Flow IS Energy_Flow_74 WITH 0.95 ; | |
| RULE 75 : IF Boiler_Pressure IS Boiler_Pressure_26 THEN Energy_Flow IS Energy_Flow_75 WITH 0.95 ; | |
| RULE 76 : IF Boiler_Pressure IS Boiler_Pressure_25 THEN Energy_Flow IS Energy_Flow_76 WITH 0.95 ; | |
| RULE 77 : IF Boiler_Pressure IS Boiler_Pressure_24 THEN Energy_Flow IS Energy_Flow_77 WITH 0.95 ; | |
| RULE 78 : IF Boiler_Pressure IS Boiler_Pressure_23 THEN Energy_Flow IS Energy_Flow_78 WITH 0.95 ; | |
| RULE 79 : IF Boiler_Pressure IS Boiler_Pressure_22 THEN Energy_Flow IS Energy_Flow_79 WITH 0.95 ; | |
| RULE 80 : IF Boiler_Pressure IS Boiler_Pressure_21 THEN Energy_Flow IS Energy_Flow_80 WITH 0.95 ; | |
| RULE 81 : IF Boiler_Pressure IS Boiler_Pressure_20 THEN Energy_Flow IS Energy_Flow_81 WITH 0.95 ; | |
| RULE 82 : IF Boiler_Pressure IS Boiler_Pressure_19 THEN Energy_Flow IS Energy_Flow_82 WITH 0.95 ; | |
| RULE 83 : IF Boiler_Pressure IS Boiler_Pressure_18 THEN Energy_Flow IS Energy_Flow_83 WITH 0.95 ; | |
| RULE 84 : IF Boiler_Pressure IS Boiler_Pressure_17 THEN Energy_Flow IS Energy_Flow_84 WITH 0.95 ; | |
| RULE 85 : IF Boiler_Pressure IS Boiler_Pressure_16 THEN Energy_Flow IS Energy_Flow_85 WITH 0.95 ; | |
| RULE 86 : IF Boiler_Pressure IS Boiler_Pressure_15 THEN Energy_Flow IS Energy_Flow_86 WITH 0.95 ; | |
| RULE 87 : IF Boiler_Pressure IS Boiler_Pressure_14 THEN Energy_Flow IS Energy_Flow_87 WITH 0.95 ; | |
| RULE 88 : IF Boiler_Pressure IS Boiler_Pressure_13 THEN Energy_Flow IS Energy_Flow_88 WITH 0.95 ; | |
| RULE 89 : IF Boiler_Pressure IS Boiler_Pressure_12 THEN Energy_Flow IS Energy_Flow_89 WITH 0.95 ; | |
| RULE 90 : IF Boiler_Pressure IS Boiler_Pressure_11 THEN Energy_Flow IS Energy_Flow_90 WITH 0.95 ; | |
| RULE 91 : IF Boiler_Pressure IS Boiler_Pressure_10 THEN Energy_Flow IS Energy_Flow_91 WITH 0.95 ; | |
| RULE 92 : IF Boiler_Pressure IS Boiler_Pressure_9 THEN Energy_Flow IS Energy_Flow_92 WITH 0.95 ; | |
| RULE 93 : IF Boiler_Pressure IS Boiler_Pressure_8 THEN Energy_Flow IS Energy_Flow_93 WITH 0.95 ; | |
| RULE 94 : IF Boiler_Pressure IS Boiler_Pressure_7 THEN Energy_Flow IS Energy_Flow_94 WITH 0.95 ; | |
| RULE 95 : IF Boiler_Pressure IS Boiler_Pressure_6 THEN Energy_Flow IS Energy_Flow_95 WITH 0.95 ; | |
| RULE 96 : IF Boiler_Pressure IS Boiler_Pressure_5 THEN Energy_Flow IS Energy_Flow_96 WITH 0.95 ; | |
| RULE 97 : IF Boiler_Pressure IS Boiler_Pressure_4 THEN Energy_Flow IS Energy_Flow_97 WITH 0.95 ; | |
| RULE 98 : IF Boiler_Pressure IS Boiler_Pressure_3 THEN Energy_Flow IS Energy_Flow_98 WITH 0.95 ; | |
| RULE 99 : IF Boiler_Pressure IS Boiler_Pressure_2 THEN Energy_Flow IS Energy_Flow_99 WITH 0.95 ; | |
| RULE 100 : IF Boiler_Pressure IS Boiler_Pressure_1 THEN Energy_Flow IS Energy_Flow_1 00 WITH 0.95 ; | |
| | |
| RULE 101 : IF Vapor_Flow IS Vapor_Flow_1 THEN Energy_Flow IS Energy_Flow_1 WITH 0.55 ; | |
| RULE 102 : IF Vapor_Flow IS Vapor_Flow_2 THEN Energy_Flow IS Energy_Flow_2 WITH 0.55 ; | |
| RULE 103 : IF Vapor_Flow IS Vapor_Flow_3 THEN Energy_Flow IS Energy_Flow_3 WITH 0.55 ; | |
| RULE 104 : IF Vapor_Flow IS Vapor_Flow_4 THEN Energy_Flow IS Energy_Flow_4 WITH 0.55 ; | |
| RULE 105 : IF Vapor_Flow IS Vapor_Flow_5 THEN Energy_Flow IS Energy_Flow_5 WITH 0.55 ; | |
| RULE 106 : IF Vapor_Flow IS Vapor_Flow_6 THEN Energy_Flow IS Energy_Flow_6 WITH 0.55 ; | |
| RULE 107 : IF Vapor_Flow IS Vapor_Flow_7 THEN Energy_Flow IS Energy_Flow_7 WITH 0.55 ; | |
| RULE 108 : IF Vapor_Flow IS Vapor_Flow_8 THEN Energy_Flow IS Energy_Flow_8 WITH 0.55 ; | |
| RULE 109 : IF Vapor_Flow IS Vapor_Flow_9 THEN Energy_Flow IS Energy_Flow_9 WITH 0.55 ; | |
| RULE 110 : IF Vapor_Flow IS Vapor_Flow_10 THEN Energy_Flow IS Energy_Flow_10 WITH 0.55 ; | |
| RULE 111 : IF Vapor_Flow IS Vapor_Flow_11 THEN Energy_Flow IS Energy_Flow_11 WITH 0.55 ; | |
| RULE 112 : IF Vapor_Flow IS Vapor_Flow_12 THEN Energy_Flow IS Energy_Flow_12 WITH 0.55 ; | |
| RULE 113 : IF Vapor_Flow IS Vapor_Flow_13 THEN Energy_Flow IS Energy_Flow_13 WITH 0.55 ; | |
| RULE 114 : IF Vapor_Flow IS Vapor_Flow_14 THEN Energy_Flow IS Energy_Flow_14 WITH 0.55 ; | |
| RULE 115 : IF Vapor_Flow IS Vapor_Flow_15 THEN Energy_Flow IS Energy_Flow_15 WITH 0.55 ; | |
| RULE 116 : IF Vapor_Flow IS Vapor_Flow_16 THEN Energy_Flow IS Energy_Flow_16 WITH 0.55 ; | |
| RULE 117 : IF Vapor_Flow IS Vapor_Flow_17 THEN Energy_Flow IS Energy_Flow_17 WITH 0.55 ; | |
| RULE 118 : IF Vapor_Flow IS Vapor_Flow_18 THEN Energy_Flow IS Energy_Flow_18 WITH 0.55 ; | |
| RULE 119 : IF Vapor_Flow IS Vapor_Flow_19 THEN Energy_Flow IS Energy_Flow_19 WITH 0.55 ; | |
| RULE 120 : IF Vapor_Flow IS Vapor_Flow_20 THEN Energy_Flow IS Energy_Flow_20 WITH 0.55 ; | |
| RULE 121 : IF Vapor_Flow IS Vapor_Flow_21 THEN Energy_Flow IS Energy_Flow_21 WITH 0.55 ; | |
| RULE 122 : IF Vapor_Flow IS Vapor_Flow_22 THEN Energy_Flow IS Energy_Flow_22 WITH 0.55 ; | |
| RULE 123 : IF Vapor_Flow IS Vapor_Flow_23 THEN Energy_Flow IS Energy_Flow_23 WITH 0.55 ; | |
| RULE 124 : IF Vapor_Flow IS Vapor_Flow_24 THEN Energy_Flow IS Energy_Flow_24 WITH 0.55 ; | |
| RULE 125 : IF Vapor_Flow IS Vapor_Flow_25 THEN Energy_Flow IS Energy_Flow_25 WITH 0.55 ; | |
| RULE 126 : IF Vapor_Flow IS Vapor_Flow_26 THEN Energy_Flow IS Energy_Flow_26 WITH 0.55 ; | |
| RULE 127 : IF Vapor_Flow IS Vapor_Flow_27 THEN Energy_Flow IS Energy_Flow_27 WITH 0.55 ; | |
| RULE 128 : IF Vapor_Flow IS Vapor_Flow_28 THEN Energy_Flow IS Energy_Flow_28 WITH 0.55 ; | |
| RULE 129 : IF Vapor_Flow IS Vapor_Flow_29 THEN Energy_Flow IS Energy_Flow_29 WITH 0.55 ; | |
| RULE 130 : IF Vapor_Flow IS Vapor_Flow_30 THEN Energy_Flow IS Energy_Flow_30 WITH 0.55 ; | |
| RULE 131 : IF Vapor_Flow IS Vapor_Flow_31 THEN Energy_Flow IS Energy_Flow_31 WITH 0.55 ; | |
| RULE 132 : IF Vapor_Flow IS Vapor_Flow_32 THEN Energy_Flow IS Energy_Flow_32 WITH 0.55 ; | |
| RULE 133 : IF Vapor_Flow IS Vapor_Flow_33 THEN Energy_Flow IS Energy_Flow_33 WITH 0.55 ; | |
| RULE 134 : IF Vapor_Flow IS Vapor_Flow_34 THEN Energy_Flow IS Energy_Flow_34 WITH 0.55 ; | |
| RULE 135 : IF Vapor_Flow IS Vapor_Flow_35 THEN Energy_Flow IS Energy_Flow_35 WITH 0.55 ; | |
| RULE 136 : IF Vapor_Flow IS Vapor_Flow_36 THEN Energy_Flow IS Energy_Flow_36 WITH 0.55 ; | |
| RULE 137 : IF Vapor_Flow IS Vapor_Flow_37 THEN Energy_Flow IS Energy_Flow_37 WITH 0.55 ; | |
| RULE 138 : IF Vapor_Flow IS Vapor_Flow_38 THEN Energy_Flow IS Energy_Flow_38 WITH 0.55 ; | |
| RULE 139 : IF Vapor_Flow IS Vapor_Flow_39 THEN Energy_Flow IS Energy_Flow_39 WITH 0.55 ; | |
| RULE 140 : IF Vapor_Flow IS Vapor_Flow_40 THEN Energy_Flow IS Energy_Flow_40 WITH 0.55 ; | |
| RULE 141 : IF Vapor_Flow IS Vapor_Flow_41 THEN Energy_Flow IS Energy_Flow_41 WITH 0.55 ; | |
| RULE 142 : IF Vapor_Flow IS Vapor_Flow_42 THEN Energy_Flow IS Energy_Flow_42 WITH 0.55 ; | |
| RULE 143 : IF Vapor_Flow IS Vapor_Flow_43 THEN Energy_Flow IS Energy_Flow_43 WITH 0.55 ; | |
| RULE 144 : IF Vapor_Flow IS Vapor_Flow_44 THEN Energy_Flow IS Energy_Flow_44 WITH 0.55 ; | |
| RULE 145 : IF Vapor_Flow IS Vapor_Flow_45 THEN Energy_Flow IS Energy_Flow_45 WITH 0.55 ; | |
| RULE 146 : IF Vapor_Flow IS Vapor_Flow_46 THEN Energy_Flow IS Energy_Flow_46 WITH 0.55 ; | |
| RULE 147 : IF Vapor_Flow IS Vapor_Flow_47 THEN Energy_Flow IS Energy_Flow_47 WITH 0.55 ; | |
| RULE 148 : IF Vapor_Flow IS Vapor_Flow_48 THEN Energy_Flow IS Energy_Flow_48 WITH 0.55 ; | |
| RULE 149 : IF Vapor_Flow IS Vapor_Flow_49 THEN Energy_Flow IS Energy_Flow_49 WITH 0.55 ; | |
| RULE 150 : IF Vapor_Flow IS Vapor_Flow_50 THEN Energy_Flow IS Energy_Flow_50 WITH 0.55 ; | |
| RULE 151 : IF Vapor_Flow IS Vapor_Flow_51 THEN Energy_Flow IS Energy_Flow_51 WITH 0.55 ; | |
| RULE 152 : IF Vapor_Flow IS Vapor_Flow_52 THEN Energy_Flow IS Energy_Flow_52 WITH 0.55 ; | |
| RULE 153 : IF Vapor_Flow IS Vapor_Flow_53 THEN Energy_Flow IS Energy_Flow_53 WITH 0.55 ; | |
| RULE 154 : IF Vapor_Flow IS Vapor_Flow_54 THEN Energy_Flow IS Energy_Flow_54 WITH 0.55 ; | |
| RULE 155 : IF Vapor_Flow IS Vapor_Flow_55 THEN Energy_Flow IS Energy_Flow_55 WITH 0.55 ; | |
| RULE 156 : IF Vapor_Flow IS Vapor_Flow_56 THEN Energy_Flow IS Energy_Flow_56 WITH 0.55 ; | |
| RULE 157 : IF Vapor_Flow IS Vapor_Flow_57 THEN Energy_Flow IS Energy_Flow_57 WITH 0.55 ; | |
| RULE 158 : IF Vapor_Flow IS Vapor_Flow_58 THEN Energy_Flow IS Energy_Flow_58 WITH 0.55 ; | |
| RULE 159 : IF Vapor_Flow IS Vapor_Flow_59 THEN Energy_Flow IS Energy_Flow_59 WITH 0.55 ; | |
| RULE 160 : IF Vapor_Flow IS Vapor_Flow_60 THEN Energy_Flow IS Energy_Flow_60 WITH 0.55 ; | |
| RULE 161 : IF Vapor_Flow IS Vapor_Flow_61 THEN Energy_Flow IS Energy_Flow_61 WITH 0.55 ; | |
| RULE 162 : IF Vapor_Flow IS Vapor_Flow_62 THEN Energy_Flow IS Energy_Flow_62 WITH 0.55 ; | |
| RULE 163 : IF Vapor_Flow IS Vapor_Flow_63 THEN Energy_Flow IS Energy_Flow_63 WITH 0.55 ; | |
| RULE 164 : IF Vapor_Flow IS Vapor_Flow_64 THEN Energy_Flow IS Energy_Flow_64 WITH 0.55 ; | |
| RULE 165 : IF Vapor_Flow IS Vapor_Flow_65 THEN Energy_Flow IS Energy_Flow_65 WITH 0.55 ; | |
| RULE 166 : IF Vapor_Flow IS Vapor_Flow_66 THEN Energy_Flow IS Energy_Flow_66 WITH 0.55 ; | |
| RULE 167 : IF Vapor_Flow IS Vapor_Flow_67 THEN Energy_Flow IS Energy_Flow_67 WITH 0.55 ; | |
| RULE 168 : IF Vapor_Flow IS Vapor_Flow_68 THEN Energy_Flow IS Energy_Flow_68 WITH 0.55 ; | |
| RULE 169 : IF Vapor_Flow IS Vapor_Flow_69 THEN Energy_Flow IS Energy_Flow_69 WITH 0.55 ; | |
| RULE 170 : IF Vapor_Flow IS Vapor_Flow_70 THEN Energy_Flow IS Energy_Flow_70 WITH 0.55 ; | |
| RULE 171 : IF Vapor_Flow IS Vapor_Flow_71 THEN Energy_Flow IS Energy_Flow_71 WITH 0.55 ; | |
| RULE 172 : IF Vapor_Flow IS Vapor_Flow_72 THEN Energy_Flow IS Energy_Flow_72 WITH 0.55 ; | |
| RULE 173 : IF Vapor_Flow IS Vapor_Flow_73 THEN Energy_Flow IS Energy_Flow_73 WITH 0.55 ; | |
| RULE 174 : IF Vapor_Flow IS Vapor_Flow_74 THEN Energy_Flow IS Energy_Flow_74 WITH 0.55 ; | |
| RULE 175 : IF Vapor_Flow IS Vapor_Flow_75 THEN Energy_Flow IS Energy_Flow_75 WITH 0.55 ; | |
| RULE 176 : IF Vapor_Flow IS Vapor_Flow_76 THEN Energy_Flow IS Energy_Flow_76 WITH 0.55 ; | |
| RULE 177 : IF Vapor_Flow IS Vapor_Flow_77 THEN Energy_Flow IS Energy_Flow_77 WITH 0.55 ; | |
| RULE 178 : IF Vapor_Flow IS Vapor_Flow_78 THEN Energy_Flow IS Energy_Flow_78 WITH 0.55 ; | |
| RULE 179 : IF Vapor_Flow IS Vapor_Flow_79 THEN Energy_Flow IS Energy_Flow_79 WITH 0.55 ; | |
| RULE 180 : IF Vapor_Flow IS Vapor_Flow_80 THEN Energy_Flow IS Energy_Flow_80 WITH 0.55 ; | |
| RULE 181 : IF Vapor_Flow IS Vapor_Flow_81 THEN Energy_Flow IS Energy_Flow_81 WITH 0.55 ; | |
| RULE 182 : IF Vapor_Flow IS Vapor_Flow_82 THEN Energy_Flow IS Energy_Flow_82 WITH 0.55 ; | |
| RULE 183 : IF Vapor_Flow IS Vapor_Flow_83 THEN Energy_Flow IS Energy_Flow_83 WITH 0.55 ; | |
| RULE 184 : IF Vapor_Flow IS Vapor_Flow_84 THEN Energy_Flow IS Energy_Flow_84 WITH 0.55 ; | |
| RULE 185 : IF Vapor_Flow IS Vapor_Flow_85 THEN Energy_Flow IS Energy_Flow_85 WITH 0.55 ; | |
| RULE 186 : IF Vapor_Flow IS Vapor_Flow_86 THEN Energy_Flow IS Energy_Flow_86 WITH 0.55 ; | |
| RULE 187 : IF Vapor_Flow IS Vapor_Flow_87 THEN Energy_Flow IS Energy_Flow_87 WITH 0.55 ; | |
| RULE 188 : IF Vapor_Flow IS Vapor_Flow_88 THEN Energy_Flow IS Energy_Flow_88 WITH 0.55 ; | |
| RULE 189 : IF Vapor_Flow IS Vapor_Flow_89 THEN Energy_Flow IS Energy_Flow_89 WITH 0.55 ; | |
| RULE 190 : IF Vapor_Flow IS Vapor_Flow_90 THEN Energy_Flow IS Energy_Flow_90 WITH 0.55 ; | |
| RULE 191 : IF Vapor_Flow IS Vapor_Flow_91 THEN Energy_Flow IS Energy_Flow_91 WITH 0.55 ; | |
| RULE 192 : IF Vapor_Flow IS Vapor_Flow_92 THEN Energy_Flow IS Energy_Flow_92 WITH 0.55 ; | |
| RULE 193 : IF Vapor_Flow IS Vapor_Flow_93 THEN Energy_Flow IS Energy_Flow_93 WITH 0.55 ; | |
| RULE 194 : IF Vapor_Flow IS Vapor_Flow_94 THEN Energy_Flow IS Energy_Flow_94 WITH 0.55 ; | |
| RULE 195 : IF Vapor_Flow IS Vapor_Flow_95 THEN Energy_Flow IS Energy_Flow_95 WITH 0.55 ; | |
| RULE 196 : IF Vapor_Flow IS Vapor_Flow_96 THEN Energy_Flow IS Energy_Flow_96 WITH 0.55 ; | |
| RULE 197 : IF Vapor_Flow IS Vapor_Flow_97 THEN Energy_Flow IS Energy_Flow_97 WITH 0.55 ; | |
| RULE 198 : IF Vapor_Flow IS Vapor_Flow_98 THEN Energy_Flow IS Energy_Flow_98 WITH 0.55 ; | |
| RULE 199 : IF Vapor_Flow IS Vapor_Flow_99 THEN Energy_Flow IS Energy_Flow_99 WITH 0.55 ; | |
| RULE 200 : IF Vapor_Flow IS Vapor_Flow_100 THEN Energy_Flow IS Energy_Flow_1 00 WITH 0.55 ; | |
| | |
| END_RULEBLOCK | |
| END_FUNCTION_BLOCK | |

Example two: application on aluminum digesters - The controlled variable (or process variable) is evaluated via laboratory tests, and the results thereof are made available every two hours. This fact makes a traditional application with the PID unfeasible. The aluminum content present in the bauxite varies during the day depending on where it has been extracted from. The control of these processes is under the responsibility of the operators, that is to say, it is in manual operation. The Learning Fuzzy Control enabled one to carry out the simultaneous evaluation of the online variables of paste flow-rate, bauxite flow-rate, density of caustic soda, in-flow of bauxite and temperature of the digester, besides the offline variables (with updating every two hours by the laboratory), like the content of caustics in the digester, contents of dissolved alumina, concentration of solids, alumina/caustics relation of the tank soda for writing the best paste flow-rate for the process at the moment. All the cited values are evaluated and considered in each control cycle with duration of 1 second. The application of the controller made the 100% manual process into a 100% automatic process, reduced by 50% the variability of the controlled variable and educed the consumption of steam by 3.2%. If bauxite-density sensors were implanted at the digester entrance, sensors for concentration of online alumina, sensor for alumina decanted in the subsequent process of the digester, the performance of the controller would be incremented. The nine reading variables and one writing variable of the controlled described, using the methodology of development of a manual controller presented in the preceding example, would require tuning in 225 rules. With an additional challenge, the offline variables are updated every two hours, which makes the tuning-in impracticable in due course.

Example three: ammonia absorption towers at a nickel plant - ammonia diluted in water at low concentration needs to be recovered for return to the process. This liquid was contaminated with various metals, so as to make the process and absorption difficult. The main challenge is that the operation of the absorption towers needs to be interrupted every 60 hours due to incrustation. Chemical or physical cleaning should be carried out to render the tower operative again. The controller implanted in this equipment, besides monitoring the sensitive temperature of the equipment (as a traditional PID controller), monitors the top temperature, the bottom temperature, top pressure, bottom pressure, feed flow, steam pressure of the facilities and steam flow-rate of the online boilers, the contamination of ammonia at the bottom is monitored via laboratory data updated every 4 hours. The controller descries the flow of feed of diluted ammonia and flow of steam to the absorption tower. With more variables being monitored, the Learning Fuzzy Control provided economy of 3.5% in the consumption of steam by the process, besides reducing the intervention of the operators in the start and shutdown manoeuvers of the absorption towers. The eight reading variables and two writing variables of the controller described, using the methodology of development of a manual controller presented in the first example, would require tuning-in of 400 rules. In practical application, one implanted the Learning Fuzzy Control on six absorption towers, which would increase the number of rules to 2400. An effort that would require more than a year of a specialist was carried out by a technician in less than one month.

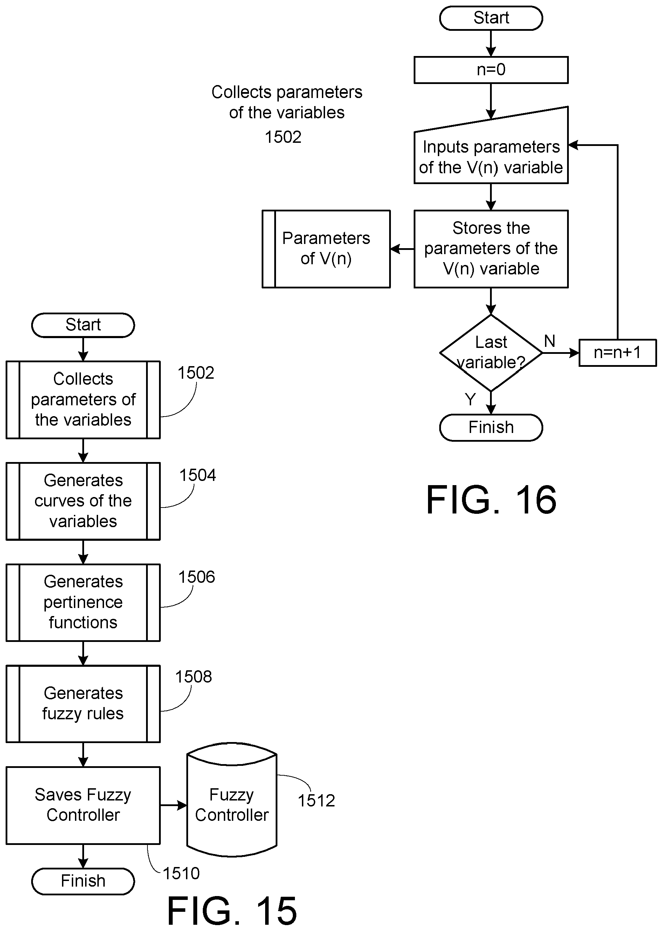

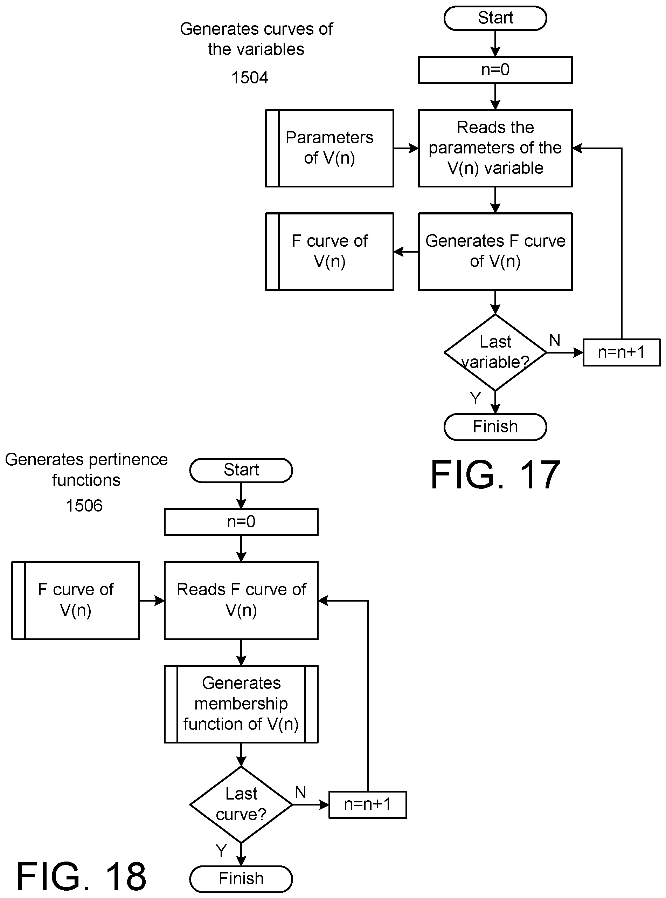

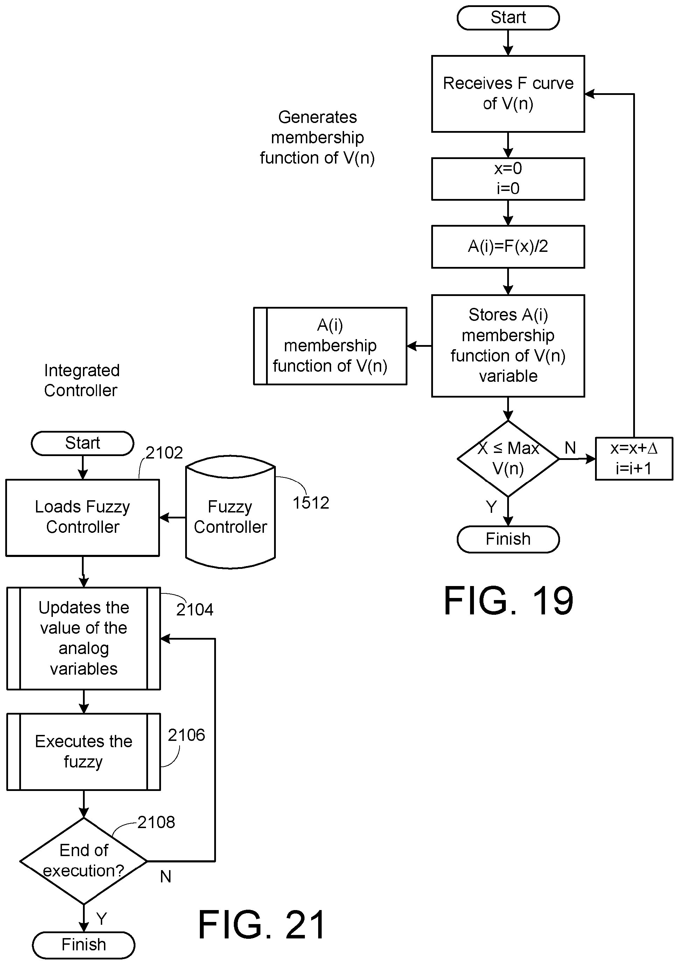

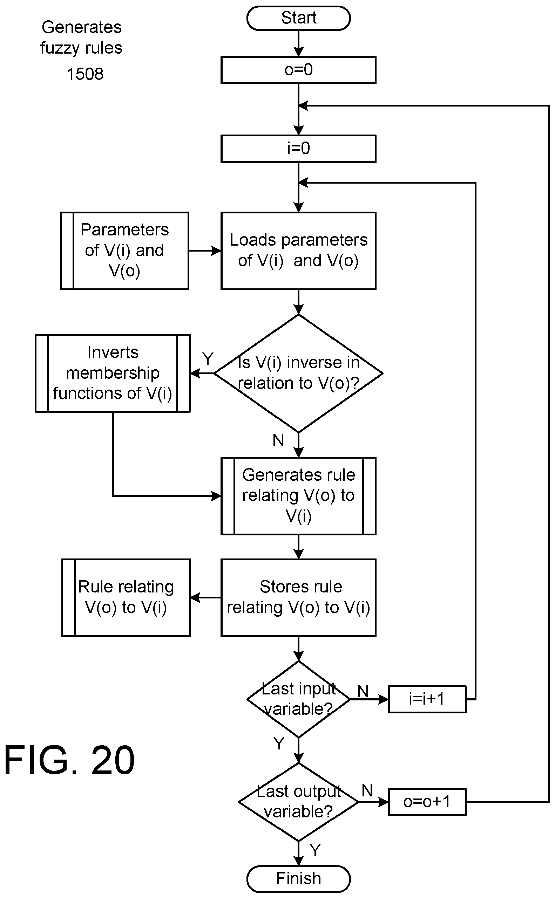

A flowchart of operation according to the present invention is shown in Fig. 15. In step 1502 the parameters of the variables is collected from the user as shown in Fig. 16. In step 504 the curves of the variables are generated as shown in Fig. 17. In step 1506 the pertinence functions are generated as shown in Fig. 18. The generates membership function of V(n) of Fig. 18 is shown in Fig. 19. In step 1508 the fuzzy rules are generated as shown in Fig. 20. In step 1510 the fuzzy controller, the fuzzy knowledge base rules developed as described above, are stored as a fuzzy controller 1512.

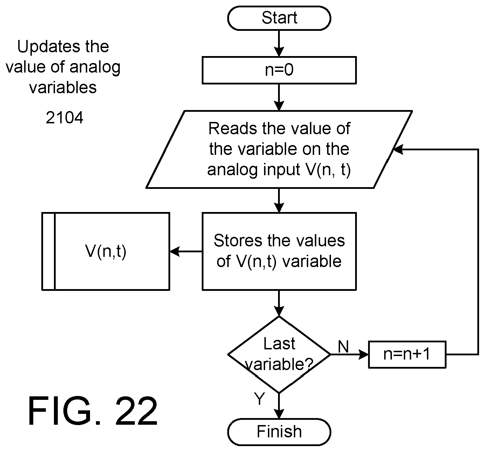

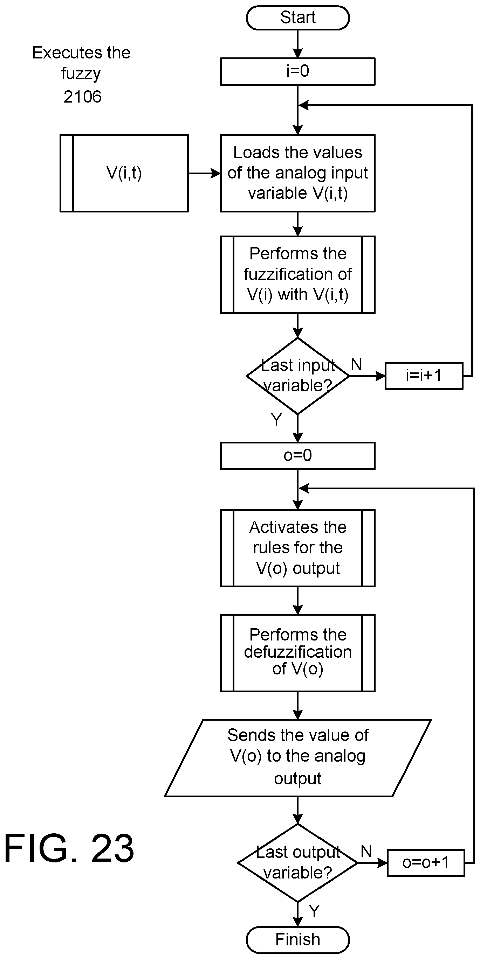

Fig. 21 is a flowchart of operations of an integrated fuzzy controller. In step 2102 the fuzzy controller or knowledge base 1512 is loaded. In step 2104 the analog values of the process being controlled are loaded as shown in Fig. 22. In step 2106 the fuzzy control is operated as shown in Fig. 23, which includes providing the desired output variable value. In step 2108 if execution is not finished, operation returns to step 2104 for continued process control.

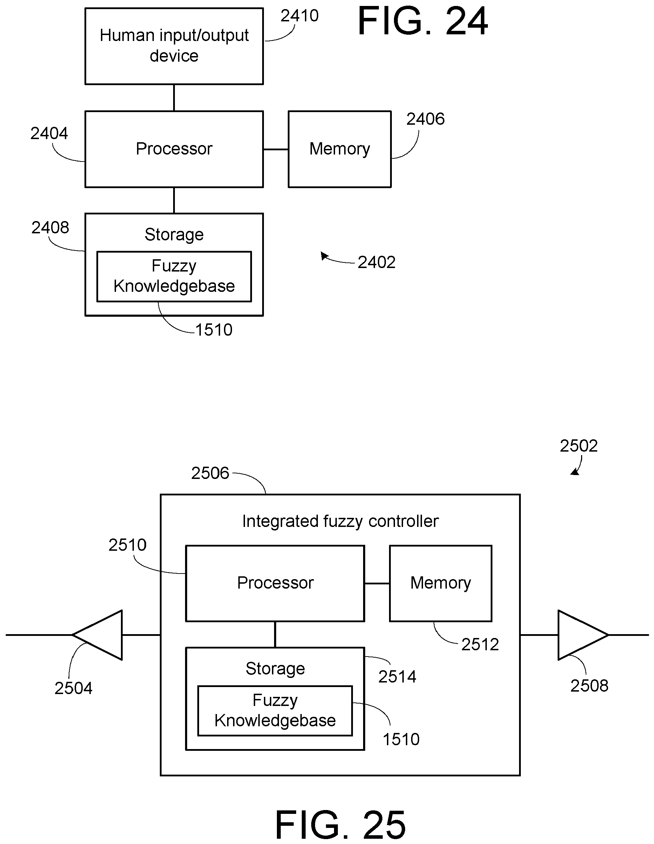

A computer, such as the computer 2402 shown in Fig. 24 may be used to generate the fuzzy knowledge base according to the present invention. The computer 2402 includes a processor 2404, a memory 2406 for holding programs and data while operating, storage 2408 for storing the software programs used to operate the computer 2402 and the fuzzy knowledge base or controller 1510 and a human input/output device 2410 for receiving the variable values.

A fuzzy controller 2502 as would be used in a process such as those described above is shown in Fig. 25. An analog-to-digital converter 2504 provides the input signals to an integrated fuzzy controller 2506, a computer configured to receive the process inputs, operate on those inputs using the fuzzy knowledge base and provide the determined output. A digital-to-analog converter 2508 receives the output signal from the integrated fuzzy controller 2506 and converts the digital value to an analog value used control the process. The integrated fuzzy controller 2506 includes a processor 2510 to receive the digital input signals and provide digital output signals, a memory 2512 and storage 2514, which includes the fuzzy knowledge base 1510 used to control the process. This is highly simplified block diagram and other configurations as known to those skilled in the art can control process using the developed fuzzy knowledge base, such as controllers which can be programmed according to IEC Rule nº 61131-7.

It is understood that the fuzzy controller 2502 could also be used to develop the fuzzy knowledge base if the software as described above and a way to receive the variable information is provided.

The above description is illustrative and not restrictive. Many variations of the invention will become apparent to those skilled in the art upon review of this disclosure. The scope of the invention should therefore be determined not with reference to the above description, but instead with reference to the appended claims along with their full scope of equivalents.

## Claims

1. A method of generating a fuzzy knowledge base for a programmable fuzzy controller (2502) used to control an industrial process, the method comprising the steps of:
receiving values of relevant input variables (100) and output variables to be controlled;
creating artificial potential fields for each of said relevant input variables and output variables;
sampling each of said potential fields in order to generate fuzzy membership functions;
compiling fuzzy membership functions into fuzzy sets; and
mapping fuzzy sets from relevant input variables to output variables to create fuzzy rules, said fuzzy rules forming the fuzzy knowledge base.

2. The method according to claim 1, wherein the step of determining the relevant input variables and output variables includes, for each variable, providing:
minimum, maximum, and equilibrium values;
an importance weight;
a non-linearity value;
a control direction; and
information as to whether said variable is an input variable or output variable.

3. The method according to claim 1 or 2, wherein the step of creating artificial potential fields includes, for each variable, deriving a function that generates a linear potential field based on said relevant input and output variables, wherein the potential field has its own minimum value at an equilibrium value of each variable.

4. The method according to claim 1, wherein the step of sampling each of said potential fields includes the steps of:
sampling each potential field in small increments of value; and
generating a fuzzy membership function for each small increment sampled, wherein the area of the membership function is proportional to the sampled potential field value.

5. The method according to claim 1, wherein the step of compiling said fuzzy membership functions into a fuzzy sets includes the steps of:
separating said variables into input and output groups; and
grouping membership functions to fuzzy sets for each variable.

6. A non-transitory computer readable medium, storing program instructions for execution by a processor, wherein the processor executes the program instructions to perform a method generating a fuzzy knowledge base for a programmable fuzzy controller used to control an industrial process, the method comprising the steps of:
receiving values of relevant input variables and output variables to be controlled;
creating artificial potential fields for each of said relevant input variables and output variables;
sampling each of said potential fields in order to generate fuzzy membership functions;
compiling fuzzy membership functions into fuzzy sets; and
mapping fuzzy sets from relevant input variables to output variables to create fuzzy rules, said fuzzy rules forming the fuzzy knowledge base.

7. The non-transitory computer readable medium according to claim 6, wherein the step of determining the relevant input variables and output variables includes, for each variable, providing:
minimum, maximum, and equilibrium values;
an importance weight;
a non-linearity value;
a control direction; and
information as to whether said variable is an input variable or output variable.

8. The non-transitory computer readable medium according to claim 6, wherein the step of creating artificial potential fields includes, for each variable, deriving a function that generates a linear potential field based on said relevant input and output variables, wherein the potential field has its own minimum value at an equilibrium value of each variable.

9. The non-transitory computer readable medium according to claim 6, wherein the step of sampling each of said potential fields includes the steps of:
sampling each potential field in small increments of value; and
generating a fuzzy membership function for each small increment sampled, wherein the area of the membership function is proportional to the sampled potential field value.

10. The non-transitory computer readable medium according to claim 6, wherein the step of compiling said fuzzy membership functions into a fuzzy sets includes the steps of:
separating said variables into input and output groups; and
grouping membership functions to fuzzy sets for each variable.

11. A computer adapted to generate a fuzzy knowledge base for a programmable fuzzy controller used to control an industrial process, the computer comprising:
a processor;
an input device coupled to said processor for receiving inputs from a user; memory coupled to said processor;
storage coupled to said processor storing program instructions for execution by said processor, wherein said processor executes said program instructions to perform a method generating a fuzzy knowledge base for a programmable fuzzy controller, the method comprising the steps of:
receiving values of relevant input variables and output variables to be controlled;
creating artificial potential fields for each of said relevant input variables and output variables;
sampling each of said potential fields in order to generate fuzzy membership functions;
compiling fuzzy membership functions into fuzzy sets; and
mapping fuzzy sets from relevant input variables to output variables to create fuzzy rules, said fuzzy rules forming the fuzzy knowledge base.

12. The computer according to claim 11, wherein the step of determining the relevant input variables and output variables includes, for each variable, providing:
minimum, maximum, and equilibrium values;
an importance weight;
a non-linearity value;
a control direction; and
information as to whether said variable is an input variable or output variable.

13. The computer according to claim 11, wherein the step of creating artificial potential fields includes, for each variable, deriving a function that generates a linear potential field based on said relevant input and output variables, wherein the potential field has its own minimum value at an equilibrium value of each variable.

14. The computer according to claim 11, wherein the step of sampling each of said potential fields includes the steps of:
sampling each potential field in small increments of value; and
generating a fuzzy membership function for each small increment sampled, wherein the area of the membership function is proportional to the sampled potential field value.

15. The computer to claim 11, wherein the step of compiling said fuzzy membership functions into a fuzzy sets includes the steps of:
separating said variables into input and output groups; and
grouping membership functions to fuzzy sets for each variable.

16. A programmable fuzzy controller for controlling an industrial process, the controller comprising:
an analog-to-digital convertor for connection to analog input signals of a process to be controlled;
a digital-to-analog convertor for providing analog output signals to control the process;
a processor coupled to said analog-to-digital convertor and said digital-to-analog convertor;
an input device coupled to said processor for receiving inputs from a user; memory coupled to said processor;
storage coupled to said processor storing program instructions for execution by said processor, wherein said processor executes said program instructions to perform a method generating a fuzzy knowledge base for a programmable fuzzy controller and controlling a process using the fuzzy knowledge base, the method comprising the steps of:
receiving values of relevant input variables and output variables to be controlled;
creating artificial potential fields for each of said relevant input variables and output variables;
sampling each of said potential fields in order to generate fuzzy membership functions;
compiling fuzzy membership functions into fuzzy sets;
mapping fuzzy sets from relevant input variables to output variables to create fuzzy rules, said fuzzy rules forming the fuzzy knowledge base;
receiving input values of the process to be controlled from said analog-to-digital convertor; and
operating on the received input values using said fuzzy knowledge base to provide an output to said digital-to-analog convertor for controlling the process.

17. The controller according to claim 16, wherein the step of determining the relevant input variables and output variables includes, for each variable, providing:
minimum, maximum, and equilibrium values;
an importance weight;
a non-linearity value;
a control direction; and
information as to whether said variable is an input variable or output variable.

18. The controller according to claim 16, wherein the step of creating artificial potential fields includes, for each variable, deriving a function that generates a linear potential field based on said relevant input and output variables, wherein the potential field has its own minimum value at an equilibrium value of each variable.

19. The controller according to claim 16, wherein the step of sampling each of said potential fields includes the steps of:
sampling each potential field in small increments of value; and
generating a fuzzy membership function for each small increment sampled, wherein the area of the membership function is proportional to the sampled potential field value.

20. The controller to claim 16, wherein the step of compiling said fuzzy membership functions into a fuzzy sets includes the steps of:
separating said variables into input and output groups; and
grouping membership functions to fuzzy sets for each variable.

## Patentansprüche

1. Verfahren zum Erzeugen einer Fuzzy-Wissensbasis für eine programmierbare Fuzzy-Steuereinrichtung (2502), die verwendet wird, um einen industriellen Prozess zu steuern, wobei das Verfahren die Schritte aufweist:
Empfangen von Werten von relevanten Eingangsvariablen (100) und Ausgangsvariablen, die gesteuert werden sollen;
Erzeugen von künstlichen Potentialfeldern für jede der relevanten Eingangsvariablen und Ausgangsvariablen;
Abtasten von jedem der Potentialfelder, um Fuzzy-Mitgliedsfunktionen zu erzeugen; Kompilieren der Fuzzy-Mitgliedsfunktionen zu Fuzzy-Sätzen; und
Abbilden der Fuzzy-Sätze von relevanten Eingangsvariablen auf Ausgangsvariablen, um Fuzzy-Regeln zu erzeugen, wobei die Fuzzy-Regeln die Fuzzy-Wissensbasis bilden.

2. Verfahren nach Anspruch 1, wobei der Schritt des Bestimmens der relevanten Eingangsvariablen und Ausgangsvariablen für jede Variable das Bereitstellen aufweist von
Minimal-, Maximal- und Gleichgewichtswerten;
einem Einflussgewicht;
einem Nichtlinearitätswert;
einer Steuerrichtung; und
Informationen hinsichtlich dessen, ob die Variable eine Eingangsvariable oder eine Ausgangsvariable ist.

3. Verfahren nach Anspruch 1 oder 2, wobei der Schritt des Erzeugens von künstlichen Potentialfeldern für jede Variable das Herleiten einer Funktion aufweist, die ein lineares Potentialfeld erzeugt, beruhend auf den relevanten Eingangs- und Ausgangsvariablen, wobei das Potentialfeld seinen eigenen Minimalwert an einem Gleichgewichtswert jeder Variable aufweist.

4. Verfahren nach Anspruch 1, wobei der Schritt des Abtastens von jedem der Potentialfelder die Schritte aufweist:
Abtasten jedes Potentialfelds mit kleinen Werterhöhungen; und
Erzeugen einer Fuzzy-Mitgliedsfunktion für jede abgetastete kleine Erhöhung, wobei die Fläche der Mitgliedsfunktion proportional zum abgetasteten Potentialfeldwert ist.

5. Verfahren nach Anspruch 1, wobei der Schritt des Kompilierens der Fuzzy-Mitgliedsfunktionen zu Fuzzy-Sätzen die Schritte aufweist:
Trennen der Variablen in Eingangs- und Ausgangsgruppen; und
Gruppieren der Mitgliedsfunktionen zu Fuzzy-Sätzen für jede Variable.

6. Nichtflüchtiges computerlesbares Medium, das Programmanweisungen zur Ausführung durch einen Prozessor speichert, wobei der Prozessor die Programmanweisungen ausführt, um ein Verfahren auszuführen, das eine Fuzzy-Wissensbasis für eine programmierbare Fuzzy-Steuereinrichtung erzeugt, die verwendet wird, um einen industriellen Prozess zu steuern, wobei das Verfahren die Schritte aufweist:
Empfangen von Werten von relevanten Eingangsvariablen und Ausgangsvariablen, die gesteuert werden sollen;
Erzeugen von künstlichen Potentialfeldern für jede der relevanten Eingangsvariablen und Ausgangsvariablen;
Abtasten von jedem der Potentialfelder, um Fuzzy-Mitgliedsfunktionen zu erzeugen; Kompilieren der Fuzzy-Mitgliedsfunktionen zu Fuzzy-Sätzen; und
Abbilden der Fuzzy-Sätze von relevanten Eingangsvariablen auf Ausgangsvariablen, um Fuzzy-Regeln zu erzeugen, wobei die Fuzzy-Regeln die Fuzzy-Wissensbasis bilden.

7. Nichtflüchtiges computerlesbares Medium nach Anspruch 6, wobei der Schritt des Bestimmens der relevanten Eingangsvariablen und Ausgangsvariablen für jede Variable das Bereitstellen aufweist von:
Minimal-, Maximal- und Gleichgewichtswerten;
einem Einflussgewicht;
einem Nichtlinearitätswert;
einer Steuerrichtung; und
Informationen hinsichtlich dessen, ob die Variable eine Eingangsvariable oder eine Ausgangsvariable ist.

8. Nichtflüchtiges computerlesbares Medium nach Anspruch 6, wobei der Schritt des Erzeugens von künstlichen Potentialfeldern für jede Variable das Herleiten einer Funktion aufweist, die ein lineares Potentialfeld erzeugt, beruhend auf den relevanten Eingangs- und Ausgangsvariablen, wobei das Potentialfeld seinen eigenen Minimalwert an einem Gleichgewichtswert jeder Variable aufweist.

9. Nichtflüchtiges computerlesbares Medium nach Anspruch 6, wobei der Schritt des Abtastens von jedem der Potentialfelder die Schritte aufweist:
Abtasten jedes Potentialfelds mit kleinen Werterhöhungen; und
Erzeugen einer Fuzzy-Mitgliedsfunktion für jede abgetastete kleine Erhöhung, wobei die Fläche der Mitgliedsfunktion proportional zum abgetasteten Potentialfeldwert ist.

10. Nichtflüchtiges computerlesbares Medium nach Anspruch 6, wobei der Schritt des Kompilierens der Fuzzy-Mitgliedsfunktionen zu Fuzzy-Sätzen die Schritte aufweist:
Trennen der Variablen in Eingangs- und Ausgangsgruppen; und
Gruppieren der Mitgliedsfunktionen zu Fuzzy-Sätzen für jede Variable.

11. Computer, der eingerichtet ist, eine Fuzzy-Wissensbasis für eine programmierbare Fuzzy-Steuereinrichtung zu erzeugen, die verwendet wird, um eine industriellen Prozess zu steuern, wobei der Computer aufweist:
einen Prozessor;
eine Eingabevorrichtung, die mit dem Prozessor zum Empfangen von Eingaben von einem Benutzer gekoppelt ist;
einen Speicher, der mit dem Prozessor gekoppelt ist;
einen Speicher, der mit dem Prozessor gekoppelt ist, der Programmanweisungen zur Ausführung durch den Prozessor speichert, wobei der Prozessor die Programmanweisungen ausführt, um ein Verfahren auszuführen, das eine Fuzzy-Wissensbasis für eine programmierbare Fuzzy-Steuereinrichtung erzeugt, wobei das Verfahren die Schritte aufweist:
Empfangen von Werten von relevanten Eingangsvariablen und Ausgangsvariablen, die gesteuert werden sollen;
Erzeugen von künstlichen Potentialfeldern für jede der relevanten Eingangsvariablen und Ausgangsvariablen;
Abtasten von jedem der Potentialfelder, um Fuzzy-Mitgliedsfunktionen zu erzeugen;
Kompilieren der Fuzzy-Mitgliedsfunktionen zu Fuzzy-Sätzen; und
Abbilden der Fuzzy-Sätze von relevanten Eingangsvariablen auf Ausgangsvariablen, um Fuzzy-Regeln zu erzeugen, wobei die Fuzzy-Regeln die Fuzzy-Wissensbasis bilden.

12. Computer nach Anspruch 11, wobei der Schritt des Bestimmens der relevanten Ein-Ein-gangsvariablen und Ausgangsvariablen für jede Variable das Bereitstellen aufweist von:
Minimal-, Maximal- und Gleichgewichtswerten;
einem Einflussgewicht;
einem Nichtlinearitätswert;
einer Steuerrichtung; und
Informationen hinsichtlich dessen, ob die Variable eine Eingangsvariable oder eine Ausgangsvariable ist.

13. Computer nach Anspruch 11, wobei der Schritt des Erzeugens von künstlichen Potentialfeldern für jede Variable das Herleiten einer Funktion aufweist, die ein lineares Potentialfeld erzeugt, beruhend auf den relevanten Eingangs- und Ausgangsvariablen, wobei das Potentialfeld seinen eigenen Minimalwert an einem Gleichgewichtswert jeder Variable aufweist.

14. Computer nach Anspruch 11, wobei der Schritt des Abtastens von jedem der Potentialfelder die Schritte aufweist:
Abtasten jedes Potentialfelds mit kleinen Werterhöhungen; und
Erzeugen einer Fuzzy-Mitgliedsfunktion für jede abgetastete kleine Erhöhung, wobei die Fläche der Mitgliedsfunktion proportional zum abgetasteten Potentialfeldwert ist.

15. Computer nach Anspruch 11, wobei der Schritt des Kompilierens der Fuzzy-Mitgliedsfunktionen zu Fuzzy-Sätzen die Schritte aufweist:
Trennen der Variablen in Eingangs- und Ausgangsgruppen; und
Gruppieren der Mitgliedsfunktionen zu Fuzzy-Sätzen für jede Variable.

16. Programmierbare Fuzzy-Steuereinrichtung zum Steuern eines industriellen Prozesses, wobei die Steuereinrichtung aufweist:
einen Analog-Digital-Wandler zur Verbindung mit analogen Eingangssignalen eines Prozesses, der gesteuert werden sollen;
einen Digital-Analog-Wandler zum Bereitstellen von analogen Ausgangssignalen, um den Prozess zu steuern;
einen Prozessor, der mit dem Analog-Digital-Wandler und dem Digital-Analog-Wandler gekoppelt ist;
eine Eingabevorrichtung, die mit dem Prozessor zum Empfangen von Eingaben von einem Benutzer gekoppelt ist;
einen Speicher, der mit dem Prozessor gekoppelt ist;
einen Speicher, der mit dem Prozessor gekoppelt ist, der Programmanweisungen zur Ausführung durch den Prozessor speichert, wobei der Prozessor die Programmanweisungen ausführt, um ein Verfahren auszuführen, das eine Fuzzy-Wissensbasis für eine programmierbare Fuzzy-Steuereinrichtung erzeugt und einen Prozess unter Verwendung der Fuzzy-Wissensbasis steuert, wobei das Verfahren die Schritte aufweist:
Empfangen von Werten von relevanten Eingangsvariablen und Ausgangsvariablen, die gesteuert werden sollen;
Erzeugen von künstlichen Potentialfeldern für jede der relevanten Eingangsvariablen und Ausgangsvariablen;
Abtasten von jedem der Potentialfelder, um Fuzzy-Mitgliedsfunktionen zu erzeugen;
Kompilieren der Fuzzy-Mitgliedsfunktionen zu Fuzzy-Sätzen;
Abbilden der Fuzzy-Sätze von relevanten Eingangsvariablen auf Ausgangsvariablen,
um Fuzzy-Regeln zu erzeugen, wobei die Fuzzy-Regeln die Fuzzy-Wissensbasis bilden;
Empfangen von Eingangswerten des Prozesses, der gesteuert werden soll, vom Analog-Digital-Wandler; und
Verarbeiten der empfangenen Eingangswerte unter Verwendung der Fuzzy-Wissensbasis, um eine Ausgabe an den Digital-Analog-Wandler zum Steuern des Prozesses zu liefern.

17. Steuereinrichtung nach Anspruch 16, wobei der Schritt des Bestimmens der relevanten Eingangsvariablen und Ausgangsvariablen für jede Variable das Bereitstellen aufweist von:
Minimal-, Maximal- und Gleichgewichtswerten;
einem Einflussgewicht;
einem Nichtlinearitätswert;
einer Steuerrichtung; und
Informationen hinsichtlich dessen, ob die Variable eine Eingangsvariable oder eine Ausgangsvariable ist.

18. Steuereinrichtung nach Anspruch 16, wobei der Schritt des Erzeugens von künstlichen Potentialfeldern für jede Variable das Herleiten einer Funktion aufweist, die ein lineares Potentialfeld erzeugt, beruhend auf den relevanten Eingangs- und Ausgangsvariablen, wobei das Potentialfeld seinen eigenen Minimalwert an einem Gleichgewichtswert jeder Variable aufweist.

19. Steuereinrichtung nach Anspruch 16, wobei der Schritt des Abtastens von jedem der Potentialfelder die Schritte aufweist:
Abtasten jedes Potentialfelds mit kleinen Werterhöhungen; und
Erzeugen einer Fuzzy-Mitgliedsfunktion für jede abgetastete kleine Erhöhung, wobei die Fläche der Mitgliedsfunktion proportional zum abgetasteten Potentialfeldwert ist.

20. Steuereinrichtung nach Anspruch 16, wobei der Schritt des Kompilierens der Fuzzy-Mitgliedsfunktionen zu Fuzzy-Sätzen die Schritte aufweist:
Trennen der Variablen in Eingangs- und Ausgangsgruppen; und
Gruppieren der Mitgliedsfunktionen zu Fuzzy-Sätzen für jede Variable.

## Revendications

1. Procédé de génération d'une base de connaissances floue d'un contrôleur flou programmable (2502) utilisé pour commander un processus industriel,
le procédé comprenant les étapes consistant à :
recevoir des valeurs de variables d'entrée (100) et de variables de sortie pertinentes à commander ;
créer des champs de potentiels artificiels de chacune desdites variables d'entrée et desdites variables de sortie pertinentes ;
échantillonner chacun desdits champs de potentiels afin de générer des fonctions d'adhésions floues ;
compiler les fonctions d'adhésions floues en ensembles flous ; et
mapper les ensembles flous à partir des variables d'entrée vers des variables de sortie pertinentes, afin de créer des règles floues, lesdites règles floues formant la base de connaissance floue.

2. Procédé selon la revendication 1, où l'étape consistant à déterminer les variables d'entrée pertinente et les variables de sortie comprend, pour chaque variable, une étape consistant à fournir :
des valeurs minimum, maximum, et d'équilibre ;
une pondération d'importance ;
une valeur de non linéarité ;
une direction de commande ; et
des informations permettant de savoir si ladite variable est une variable d'entrée ou une variable de sortie.

3. Procédé selon la revendication 1 ou 2, où l'étape consistant à créer des champs de potentiels artificiels comprend, pour chaque variable, une étape consistant à obtenir une fonction qui génère un champ de potentiel linéaire sur la base desdites variables d'entrée et de sortie pertinentes, où le champ de potentiel présente sa propre valeur minimum à une valeur d'équilibre de chaque variable.

4. Procédé selon la revendication 1, où l'étape consistant à échantillonner chacun desdits champs de potentiels comprend les étapes consistant à :
échantillonner chaque champ de potentiel en petits incréments de valeur ; et
générer une fonction d'adhésion floue pour chaque petit incrément échantillonné, où la zone de la fonction d'adhésion est proportionnelle à la valeur du champ de potentiel échantillonné.

5. Procédé selon la revendication 1, où l'étape consistant à compiler lesdites fonctions d'adhésions floues en ensembles flous, comprend les étapes consistant à :
séparer lesdites variables en groupes d'entrée et de sortie ; et
grouper les fonctions l'adhésions en ensembles flous pour chacun variable.

6. Support permanent pouvant être lu par un ordinateur, stockant des instructions de programme destinées à leur exécution par un processeur, où le processeur exécute les instructions de programme afin d'exécuter un procédé de génération d'une base de connaissance floue d'un contrôleur flou programmable utilisé pour commander un processus industriel, le procédé comprenant les étapes consistant à :
recevoir des valeurs de variables d'entrée et de variables de sortie pertinentes à commander ;
créer des champs de potentiels artificiels de chacune desdites variables d'entrée et desdites variables de sortie pertinentes ;
échantillonner chacun desdits champs de potentiels afin de générer des fonctions d'adhésions floues ;
compiler les fonctions d'adhésions floues en ensembles flous ; et
mapper les ensembles flous à partir des variables d'entrée vers des variables de sortie pertinentes, afin de créer des règles floues, lesdites règles floues formant la base de connaissance floue.

7. Support permanent pouvant être lu par un ordinateur selon la revendication 6, où l'étape consistant à déterminer les variables d'entrée pertinente et les variables de sortie comprend, pour chaque variable, une étape consistant à fournir :
des valeurs minimum, maximum, et d'équilibre ;
une pondération d'importance ;
une valeur de non linéarité ;
une direction de commande ; et
des informations permettant de savoir si ladite variable est une variable d'entrée ou une variable de sortie.

8. Support permanent pouvant être lu par un ordinateur selon la revendication 6, où l'étape consistant à créer des champs de potentiels artificiels comprend, pour chaque variable, une étape consistant à obtenir une fonction qui génère un champ de potentiel linéaire sur la base desdites variables d'entrée et de sortie pertinentes, où le champ de potentiel présente sa propre valeur minimum à une valeur d'équilibre de chaque variable.

9. Support permanent pouvant être lu par un ordinateur selon la revendication 6, où l'étape consistant à échantillonner chacun desdits champs de potentiels comprend les étapes consistant à :
échantillonner chaque champ de potentiel en petits incréments de valeur ; et
générer une fonction d'adhésion floue pour chaque petit incrément échantillonné, où la zone de la fonction d'adhésion est proportionnelle à la valeur du champ de potentiel échantillonné.

10. Support permanent pouvant être lu par un ordinateur selon la revendication 6, où l'étape consistant à compiler lesdites fonctions d'adhésions floues en ensembles flous, comprend les étapes consistant à :
séparer lesdites variables en groupes d'entrée et de sortie ; et
grouper les fonctions l'adhésions en ensembles flous pour chacun variable.

11. Ordinateur adapté pour générer une base de connaissance floue d'un contrôleur flou programmable utilisé pour commander un processus industriel, l'ordinateur comprenant :
un processeur ;
un dispositif d'entrée couplé audit processeur, destiné à recevoir des entrées en provenance d'un utilisateur ; une mémoire couplée audit processeur ;
un stockage couplé audit processeur stockant des instructions de programme destinées à leur exécution par ledit processeur, où ledit le processeur exécute lesdites instructions de programme afin d'exécuter un procédé destiné à générer une base de connaissance floue d'un contrôleur flou programmable,
le procédé comprenant les étapes consistant à :
recevoir des valeurs de variables d'entrée et de variables de sortie pertinentes à commander ;
créer des champs de potentiels artificiels de chacune desdites variables d'entrée et desdites variables de sortie pertinentes ;
échantillonner chacun desdits champs de potentiels afin de générer des fonctions d'adhésions floues ;
compiler les fonctions d'adhésions floues en ensembles flous ; et
mapper les ensembles flous à partir des variables d'entrée vers des variables de sortie pertinentes, afin de créer des règles floues, lesdites règles floues formant la base de connaissance floue.

12. Ordinateur selon la revendication 11, où l'étape consistant à déterminer les variables d'entrée pertinente et les variables de sortie comprend, pour chaque variable, une étape consistant à fournir :
des valeurs minimum, maximum, et d'équilibre ;
une pondération d'importance ;
une valeur de non linéarité ;
une direction de commande ; et
des informations permettant de savoir si ladite variable est une variable d'entrée ou une variable de sortie.

13. Ordinateur selon la revendication 11, où l'étape consistant à créer des champs de potentiels artificiels comprend, pour chaque variable, une étape consistant à obtenir une fonction qui génère un champ de potentiel linéaire sur la base desdites variables d'entrée et de sortie pertinentes, où le champ de potentiel présente sa propre valeur minimum à une valeur d'équilibre de chaque variable.

14. Ordinateur selon la revendication 11, où l'étape consistant à échantillonner chacun desdits champs de potentiels comprend les étapes consistant à :
échantillonner chaque champ de potentiel en petits incréments de valeur ; et
générer une fonction d'adhésion floue pour chaque petit incrément échantillonné, où la zone de la fonction d'adhésion est proportionnelle à la valeur du champ de potentiel échantillonné.

15. Ordinateur selon la revendication 11, où l'étape consistant à compiler lesdites fonctions d'adhésions floues en ensembles flous, comprend les étapes consistant à :
séparer lesdites variables en groupes d'entrée et de sortie ; et
grouper les fonctions l'adhésions en ensembles flous pour chacun variable.

16. Contrôleur flou programmable destiné à commander un processus industriel, le contrôleur comprenant :
un convertisseur analogique - numérique destiné à être connecté à des signaux d'entrée analogiques d'un processus à commander ;
un convertisseur numérique - analogique destiné à fournir des signaux de sortie analogiques destinés à commander le processus ;
un processeur couplé audit convertisseur analogique - numérique et audit convertisseur numérique - analogique ;
un dispositif d'entrée couplé audit processeur, destiné à recevoir des entrées en provenance d'un utilisateur ;
une mémoire couplée audit processeur ;
un stockage couplé audit processeur stockant des instructions de programme destinées à leur exécution par ledit processeur, où ledit le processeur exécute lesdites instructions de programme afin d'exécuter un procédé destiné à générer une base de connaissance floue d'un contrôleur flou programmable, et commandant un processus en utilisant la base de connaissance floue,
le procédé comprenant les étapes consistant à :
recevoir des valeurs de variables d'entrée et de variables de sortie pertinentes à commander ;
créer des champs de potentiels artificiels de chacune desdites variables d'entrée et desdites variables de sortie pertinentes ;
échantillonner chacun desdits champs de potentiels afin de générer des fonctions d'adhésions floues ;
compiler les fonctions d'adhésions floues en ensembles flous ;
mapper les ensembles flous à partir des variables d'entrée vers des variables de sortie pertinentes, afin de créer des règles floues, lesdites règles floues formant la base de connaissance floue ;
recevoir des valeurs d'entrée du processus à commander en provenance dudit convertisseur analogique - numérique ; et
agir sur les valeurs d'entrée reçues en utilisant ladite base de connaissances floues de façon à fournir une sortie audit convertisseur numérique - analogique afin de commander le processus.

17. Contrôleur selon la revendication 16, où l'étape consistant à déterminer les variables d'entrée pertinente et les variables de sortie comprend, pour chaque variable, une étape consistant à fournir :
des valeurs minimum, maximum, et d'équilibre ;
une pondération d'importance ;
une valeur de non linéarité ;
une direction de commande ; et
des informations permettant de savoir si ladite variable est une variable d'entrée ou une variable de sortie.

18. Contrôleur selon la revendication 16, où l'étape consistant à créer des champs de potentiels artificiels comprend, pour chaque variable, une étape consistant à obtenir une fonction qui génère un champ de potentiel linéaire sur la base desdites variables d'entrée et de sortie pertinentes, où le champ de potentiel présente sa propre valeur minimum à une valeur d'équilibre de chaque variable.

19. Contrôleur selon la revendication 16, où l'étape consistant à échantillonner chacun desdits champs de potentiels comprend les étapes consistant à :
échantillonner chaque champ de potentiel en petits incréments de valeur ; et
générer une fonction d'adhésion floue pour chaque petit incrément échantillonné, où la zone de la fonction d'adhésion est proportionnelle à la valeur du champ de potentiel échantillonné.

20. Contrôleur selon la revendication 16, où l'étape consistant à compiler lesdites fonctions d'adhésions floues en ensembles flous, comprend les étapes consistant à :
séparer lesdites variables en groupes d'entrée et de sortie ; et
grouper les fonctions l'adhésions en ensembles flous pour chacun variable.
